# EUROPÄISCHE PATENTSCHRIFT

(11) **EP 1 938 004 B1**
(45) Veröffentlichungstag und Bekanntmachung des Hinweises auf die Patenterteilung: **28.04.2010**
(21) Anmeldenummer: 06806256.1
(22) Anmeldetag: 13.10.2006
(51) Int. Cl.: F16H 61/12, F16H 61/688

(54) **STEUERUNGSVENTILANORDNUNG ZUR STEUERUNG EINER ANFAHRKUPPLUNG EINES AUTOMATGETRIEBES**
CONTROL VALVE ASSEMBLY FOR CONTROLLING A STARTING CLUTCH OF AN AUTOMATIC TRANSMISSION
ENSEMBLE SOUPAPE DE COMMANDE POUR LA COMMANDE D'UN EMBRAYAGE DE DEMARRAGE D'UNE BOITE DE VITESSES AUTOMATIQUE

(30) Priorität: 21.10.2005 DE 102005050493
(43) Veröffentlichungstag der Anmeldung: 02.07.2008
(73) Patentinhaber: ZF Friedrichshafen AG, 88038 Friedrichshafen (DE)
(72) Erfinder: FRITZER, Anton, 88677 Markdorf (DE); GIERER, Georg, 88079 Kressbronn (DE); HERRMANN, Markus, 88175 Scheidegg (DE); SCHMIDT, Thilo, 88074 Meckenbeuren (DE)
(86) Internationale Anmeldenummer: PCT/EP2006/009904
(87) Internationale Veröffentlichungsnummer: WO 2007/045401

(56) Entgegenhaltungen:
- EP-A- 1 519 080
- EP-A- 1 522 754
- DE-A1- 10 238 104
- DE-A1- 10 338 355
- DE-A1-102004 020 569
- DE-B3-102004 018 962

## Beschreibung

Die Erfindung betrifft eine Steuerungsventilanordnung zur Steuerung einer Anfahrkupplung eines Automatgetriebes eines Kraftfahrzeuges gemäß dem Oberbegriff des Patentanspruchs 1 oder 2, wie aus DE 102 004 018 962 B bekannt.

In Automatgetrieben mit automatisierter nasser Anfahrkupplung wird üblicherweise zur Aktivierung eines mechanischen Getriebenotlaufs, etwa nach Ausfall eines Getriebesteuergerätes, der Kraftschluss im Getriebe dadurch beendet, dass diese Anfahrkupplung stromlos in den geöffneten Zustand überführt wird. Diese Strategie kann insbesondere bei Fahrzuständen im fließenden Verkehr zu kritischen Zuständen führen, da dadurch nur noch ein vortriebsloses Ausrollen des Fahrzeugs möglich ist.

Ein Schließen der nassen Anfahrkupplung in einer solchen Fahrbetriebssituation ist ebenfalls aus sicherheitstechnischen Gründen nicht möglich, da der Kraftschluss nur über einen hydraulischen Kupplungsbetätigungsdruck erhalten bleibt. Sofern der Fahrzeugantriebsmotor beim Absinken der Fahrzeuggeschwindigkeit bei geschlossener Kupplung abgewürgt wird, bleibt noch eine Restfahrgeschwindigkeit übrig, in der wichtige vom Motor an sich anzutreibende Nebenaggregate wie Bremskraftverstärker oder Lenkhilfepumpe dann nicht mehr ausreichend angetrieben werden können.

In Automatgetrieben mit trockener Anfahrkupplung wird bei einer Aktivierung des mechanischen Notlaufs diese Kupplung geschlossen, so dass der Abtrieb des Fahrzeugs bis zum Fahrzeugstillstand mit dem Motor antriebstechnisch verbunden bleibt. Hierbei entstehen zwar keine kritischen Fahrzustände, das Fahrzeug kann aber nach dem Fahrzeugstillstand nicht mehr bewegt bzw. weggeschoben werden.

Demnach besteht ein Bedarf an einer Steuerungseinrichtung für eine Anfahrkupplung eines Automatgetriebes eines Kraftfahrzeuges, welche in Abhängigkeit eines von der Motordrehzahl und/oder der Abtriebsdrehzahl des Getriebes den Kraftschluss im Antriebsstrang erst dann unterbricht, wenn eine bestimmte Motordrehzahl bzw. Getriebeabtriebsdrehzahl unterschritten wird, so dass kein Abwürgen des Fahrzeugantriebsmotors erfolgt, die Nebenaggregate angetrieben bleiben und dem Fahrer noch die Möglichkeit gegeben ist, eine gegebenenfalls vorhandene Gefahrenzone sicher zu verlassen. Zudem wird durch ein solches Steuerungsverhalten auch das Bewegen des Fahrzeugs im Stillstand möglich, da der Kraftfluss zwischen Motor und Getriebe unterbrochen ist.

Vor diesem Hintergrund ist aus der DE 199 43 939 A1 eine hydraulische Notsteuerung für ein Umschlingungsgetriebe bekannt, bei der eine dem Getriebe zugeordnete Kupplung in Abhängigkeit einer Drehzahl eines Fahrzeugantriebsmotors geöffnet oder geschlossen werden kann. Dadurch kann bei einer Störung ein erneutes Abwürgen des Antriebsmotors bei Unterschreiten einer bestimmten Grenzdrehzahl vermieden sowie ein Anfahren bei Überschreitung einer bestimmten Drehzahl ermöglicht werden. Je nach Ausbildung der Notsteuerung kann das drehzahlabhängige Steuersignal dabei beispielsweise als hydraulischer Druck, als pneumatischer Druck oder als elektrische Spannung erzeugbar und nutzbar sein.

Zudem ist aus der DE 102 38 104 A1 ein Verfahren zum Ansteuern eines Notschaltprogramms für ein Automatgetriebe mit einer Anfahrkupplung bekannt, welches zur Realisierung eines Notlaufs auch beim Stillstand des Fahrzeugs sowie zur Verhinderung des Absinkens der Motordrehzahl unter eine Abwürgschwelle besonders ausgebildet ist. Bei diesem Verfahren ist vorgesehen, dass das Notschaltprogramm über ein von der Fahrzeuggeschwindigkeit und/oder der Motordrehzahl abhängiges Signal angesteuert wird, welches über eine Ventillogik verarbeitbar ist und bewirkt, dass im Schubbetrieb der Kraftschluss zum Motor rechtzeitig unterbrochen wird, um den Fahrzeugmotor nicht abzuwürgen.

Des Weiteren ist aus der DE 103 38 355 A1 ein Doppelkupplungsgetriebes bekannt, das eine erste und eine zweite Kupplung aufweist, wobei für einen Normalbetrieb zum Schließen/Öffnen der ersten Kupplung eine erste und zum Schließen/Öffnen der zweiten Kupplung eine zweite durch eine Elektronik steuerbare Hydraulik vorhanden ist. Ferner ist eine Zustandshaltehydraulik vorgesehen, der über eine erste und eine zweite hydraulische Leitung Zustandssignale entsprechend dem momentanen Schaltzustand der ersten und der zweiten Kupplung zugeführt werden, und die über hydraulische Steuerleitungen mit der ersten und der zweiten Hydraulik verbunden ist. Bei einem Ausfall der Elektronik steuert die Zustandshaltehydraulik die erste und die zweite Hydraulik so an, dass zumindest in manchen Schaltzuständen der beiden Kupplungen der unmittelbar vor dem Ausfall der Elektronik vorliegende Schaltzustand der Kupplungen aufrechterhalten bleibt.

Schließlich ist aus der am Anmeldetag dieser Patentanmeldung nicht vorveröffentlichen DE 102 004 020 569.8 eine Steuerungsventilanordnung zur Steuerung einer Anfahrkupplung eines Automatgetriebes bekannt, mit der einfach, herstellkostengünstig und zuverlässig in einer Notsteuerungssituation die Anfahrkupplung dann geöffnet werden kann, wenn die Motordrehzahl und/oder die Abtriebsdrehzahl des Getriebes bzw. die Fahrgeschwindigkeit des Fahrzeugs unter einen vorbestimmten Wert fällt.

Diese Steuerungsventilanordnung weist ein Kupplungsregelventil zur Ansteuerung wenigstens einer Kupplungsbetätigungsvorrichtung auf, welches im Normalbetrieb des Getriebes einen zugeleiteten Versorgungsdruck in Abhängigkeit von einem Vorsteuerdruck oder einem elektrischen Vorsteuersignal in einen Kupplungsbetätigungsdruck zur Ansteuerung der Kupplungsbetätigungsvorrichtung umwandelt. Die Steuerungsventilanordnung ist zudem dadurch gekennzeichnet, dass zur Realisierung eines Notbetriebes des Getriebes bei Wegfall des Vorsteuerdrucks bzw. des elektrischen Vorsteuersignals motordrehzahl- und/oder getriebeabtriebsdrehzahlabhängig ein Aktivierungsdruck auf das Kupplungsregelventil oder direkt auf die Kupplungsbetätigungsvorrichtung leitbar ist, wodurch diese so lange in Schließstellung gehalten wird, wie die genannte Drehzahl oberhalb eines vorbestimmten Drehzahlgrenzwertes liegt.

Durch diese Ventilanordnung wird eine kostengünstig herstellbare und zuverlässig betreibbare Steuerungsvorrichtung für den Notfahrbetrieb eines Fahrzeugs mit einem Automatgetriebe geschaffen, welche dann aktiviert wird, wenn beispielsweise ein elektronisches Getriebesteuerungsgerät und/oder ein elektrisch betätigbares Kupplungsregelventil ausfallen. Dabei sorgt der von der Drehzahl des Fahrzeugantriebsmotors und/oder von der Getriebeausgangsdrehzahl abhängige Steuerungsdruck dafür, dass eine Anfahrkupplung des Automatgetriebes zur Drehmomentübertragung durch das Getriebe geschlossen bleibt, solange die Fahrgeschwindigkeit und damit die Drehzahl des Antriebsmotors nicht unter eine solche Abwürgdrehzahl fällt, bei der der Antriebsmotor seinen verbrennungsmotorischen Betrieb einstellen würde.

Sofern die Fahrgeschwindigkeit bei einem solchen Notfahrbetrieb tatsächlich soweit reduziert ist, dass bei geschlossener Anfahrkupplung mit dem Abwürgen des Motors zu rechnen ist, öffnet die bekannte Steuerungsventilanordnung mittels des drehzahlgekoppelten Steuerdrucks die bis dahin drehmomentübertragende Anfahrkupplung. Ein Abwürgen des Motors wird dadurch vorteilhaft vermieden, so dass von diesem wichtige Fahrzeugnebenaggregate, wie beispielsweise ein Bremskraftverstärker und eine Lenkhilfepupe problemlos weiterbetrieben werden können.

Der Erfindung liegt die Aufgabe zugrunde, eine anders ausgebildete Steuerungsventilanordnung der gattungsgemäßen Art vorzustellen, mit der ein hydraulischer Notbetrieb des Automatgetriebes aktiviert und aufrecht erhalten werden kann, wenn bei einem Ausfall eines elektronischen Steuerungsgerätes ein vorbestimmter Vorsteuerdruck für die Ventile der Steuerungsventilanordnung wegfällt und ein motor- oder getriebeabtriebsdrehzahlabhängiger Steuerdruck ausreichend hoch ist.

Die Lösung dieser Aufgabe ergibt sich aus den Merkmalen des Hauptanspruchs 1 oder 2, während vorteilhafte Weiterbildungen und Ausgestaltungen der Erfindung den Unteransprüchen entnehmbar sind.

Demnach geht die Erfindung aus von einer Steuerungsventilanordnung zur Betätigungssteuerung zumindest einer Anfahrkupplung eines Automatgetriebes eines Kraftfahrzeuges, mit wenigstens einem Kupplungsregelventil, über das ein Versorgungsdruck als Kupplungsbetätigungsdruck in einen Druckraum einer zugeordneten Kupplungsbetätigungsvorrichtung leitbar ist, mit einem Druckregelventil, welches von einem elektronischen Steuerungsgerät ansteuerbar ist und zumindest ein Steuerungsventil der Steuerungsventilanordnung mit einem Vorsteuerdruck P_VST3 versorgt, und mit einer Selbsthaltehydraulik, mit deren Hilfe bei einem Ausfall des elektronischen Steuerungsgerätes und somit einem Wegfall des Vorsteuerdrucks P_VST3 zumindest in manchen Betriebssituationen ein hydraulischer Notbetrieb mit einer geschlossenen Anfahrkupplung aufrecht erhalten werden kann.

Zur Lösung des beschriebenen technischen Problems ist bei der Steuerungsventilanordnung gemäß der Erfindung vorgesehen, dass die Selbsthaltehydraulik zur Realisierung der Notbetriebsfunktion ein Selbsthalteventil und ein Aktivierungsventil aufweist, dass das Selbsthalteventil so ausgebildet ist, dass es zur Weiterleitung eines Aktivierungsdrucks in Abhängigkeit von einem motordrehzahlabhängigen oder getriebeabtriebsdrehzahlabhängigen Steuerdruck zu dem Aktivierungsventil geeignet ist, dass das Aktivierungsventil zur Weiterleitung des Aktivierungsdrucks an das zumindest eine Kupplungsregelventil in der Lage ist, und dass die Steuerungsventilanordnung mit Mitteln ausgestattet ist, mit denen das Aktivieren oder Deaktivieren der Notbetriebsfunktion durch den Kupplungsbetätigungsdruck steuerbar ist.

Diese Steuerungsventilanordnung aktiviert und deaktiviert daher bei einem Ausfall eines zugeordneten elektronischen Steuerungsgerätes bzw. bei einem Wegfall des Vorsteuerdrucks eine hydraulische Notbetriebsart des Fahrzeugs in Abhängigkeit von der Höhe des drehzahlabhängigen Steuerdrucks und dem vor der genannten Störung aktuellen Kupplungsbetätigungsdruck.

Bei einer Steuerungsventilanordnung für ein Kraftfahrzeug mit nur einer Anfahrkupplung, einem Kupplungsregelventil und einer Kupplungsbetätigungsvorrichtungen ist diese Steuerungsventilanordnung derart ausgebildet, dass bei einem ausreichend hohen drehzahlabhängigen Steuerdruck der vor dem Ausfall des elektronischen Steuerungsgeräts bzw. des Wegfalls des Vorsteuerdrucks zuletzt vorliegende Schaltzustand der Kupplungsbetätigungsvorrichtung beibehalten wird.

Eine für ein Doppelkupplungsgetriebe mit zwei Anfahrkupplungen vorgesehenen Steuerungsventilanordnung mit zwei Kupplungsregelventilen und zwei Kupplungsbetätigungsvorrichtungen ist beispielsweise derart ausgebildet, dass bei einem ausreichend hohen drehzahlabhängigen Steuerdruck und einem Ausfall des elektronischen Steuerungsgeräts bzw. Wegfall des Vorsteuerdrucks eine bestimmte Kupplungsbetätigungsvorrichtung der beiden Kupplungsbetätigungsvorrichtung geschlossen wird bzw. geschlossen bleibt, wenn eine der beiden Kupplungsbetätigungsvorrichtungen vor der genannten Störung geschlossen oder schlupfend geschlossen war. Dadurch ist eines der beiden Teilgetriebe speziell auch für den beschriebenen Notbetrieb vorgesehen, so dass insbesondere die dort vorhandenen Übersetzungsverhältnisse für den Notbetrieb nutzbar sind.

In einer anderen für ein Doppelkupplungsgetriebe vorgesehenen Variante einer Steuerungsventilanordnung gemäß der Erfindung mit zwei Kupplungsregelventilen und zwei Kupplungsbetätigungsvorrichtungen ist diese derart ausgebildet, dass bei einem ausreichend hohen drehzahlabhängigen Steuerdruck und einem Ausfall des elektronischen Steuerungsgeräts bzw. Wegfall des Vorsteuerdrucks diejenige Kupplungsbetätigungsvorrichtung der beiden Kupplungsbetätigungsvorrichtungen geschlossen wird bzw. geschlossen bleibt, die vor dem genannten Ausfall geschlossen war beziehungsweise schlupfend betrieben wurde.

Durch diesen Aufbau wird eine Zugkraftunterbrechung vorteilhaft vermieden, welche bei der vorherigen Variante bei einem Wechsel des drehmomentübertragenden Teilgetriebes gegebenenfalls entsteht, wenn vor dem Beginn des Notbetriebs die niedriger priorisierte Kupplungsbetätigungsvorrichtung kupplungschließend aktiviert war und während des Notbetriebs die höherpriorisierte Kupplungsbetätigungsvorrichtung kupplungschließend betätigt werden soll.

Unabhängig von den beschriebenen Varianten der Steuerungsventilanordnung kann in einer konkreten Bauform derselben vorgesehen sein, dass der Kupplungsbetätigungsdruck über eine Leitung zu einem Druckraum des Aktivierungsventils und von dort über eine Leitung zu einem Druckraum des Selbsthalteventils leitbar ist, und dass der Kupplungsbetätigungsdruck von dem letztgenannten Druckraum über eine Leitung zu einem Druckraum an dem rückstellfederfernen Ende des Selbsthalteventils führbar ist. Durch diesen Aufbau ist eine steuerungstechnische Rückkopplung des Kupplungsbetätigungsdruckes über das Aktivierungsventil zu dem Selbsthalteventil realisiert.

Zudem kann bei einer solchen Steuerungsventilanordnung vorgesehen sein, dass der den Kupplungsbetätigungsdruck aufnehmende Druckraum am Aktivierungsventil von einem mittleren Steuerkolben eines Steuerschiebers des Aktivierungsventils dann absperrbar ist, wenn im rückstellfederfernen Druckraum des Aktivierungsventils der den Normalbetrieb kennzeichnende Vorsteuerdruck anliegt.

Weitere Merkmale einer Steuerungsventilanordnung gemäß der Erfindung sind, dass der Aktivierungsdruck von dem Selbsthalteventil über eine Leitung zu dem Aktivierungsventil und von dort über eine Leitung zu einem Druckraum am rückstellfederfernen Ende des Kupplungsregelventils leitbar ist, wenn der Vorsteuerdruck am Aktivierungsventil weggefallen ist und der Kupplungsbetätigungsdruck so hoch ist, dass dieser den Steuerschieber des Aktivierungsventils gegen die Kraft dessen Rückstellfeder so weit verschieben kann, dass ein Steuerkolben des Selbsthalteventils eine diesbezügliche Durchleitungsverbindung zwischen zwei Druckräumen am Selbsthalteventil freigibt.

Eine solche Steuerungsventilanordnung kann zudem dadurch gekennzeichnet sein, dass das Selbsthalteventil so ausgebildet ist, dass dann, wenn der Vorsteuerdruck am Aktivierungsventil weggefallen ist und der Kupplungsbetätigungsdruck am Selbsthalteventil ausreichend hoch ist, der drehzahlabhängige Steuerdruck am Steuerschieber des Selbsthalteventils gegen die Kraft seiner Rückstellfeder wirken kann. Durch diesen Aufbau gelingt es, den Steuerschieber des Selbsthalteventils mit Hilfe eines ausreichend hohen Kupplungsbetätigungsdrucks soweit axial zu verschieben, dass der drehzahlabhängige Steuerdruck ebenfalls axial auf diesen Steuerschieber wirkt. Solange dann der drehzahlabhängige Steuerdruck hoch genug ist, wird das Selbsthalteventil von diesem Steuerdruck in einer den hydraulischen Notbetrieb ermöglichenden Stellung gehalten.

Um die letztgenannte Steuerungsventilanordnung für die geschilderte Funktionsweise weiter auszubilden, ist vorgesehen, dass ein Kupplungsregelventil einen kurzen Steuerschieber und einen langen Steuerschieber aufweist, wobei im Notbetrieb der Aktivierungsdruck auf den kurzen Steuerschieber derart leitbar ist, dass der kurze Steuerschieber dann auf den langen Steuerschieber wirkt.

Eine konkrete Ausführungsform einer Steuerungsventilanordnung für ein Getriebe mit zwei Anfahrkupplungen weist zwei Kupplungsregelventile und zwei Kupplungsbetätigungsvorrichtungen auf, von denen nur ein erstes Kupplungsregelventil von dem Aktivierungsventil mit dem Aktivierungsdruck beaufschlagt wird, bei dem auf die beiden Kupplungsregelventile im Normalbetrieb jeweils zwei unterschiedliche Vorsteuerdrücke wirken, mit deren Hilfe aus einem den beiden Kupplungsregelventilen zugeleiteten Versorgungsdruck der jeweilige Kupplungsbetätigungsdruck für die zwei Kupplungsbetätigungsvorrichtungen einstellbar ist, und bei dem der jeweils höhere Kupplungsbetätigungsdruck mittels eines Wechselventils über das Aktivierungsventil dem rückstellfederfernen Druckraum des Selbsthalteventil zuführbar ist.

Mit dieser Steuerungsventilanordnung wird daher zur Durchführung des hydraulischen Notbetriebs immer das einzige mit dem Aktivierungsdruck beaufschlagbare Kupplungsregelventil genutzt, welches die zugeordnete und demnach höher priorisierte Kupplungsbetätigungsvorrichtung mit einem eine Anfahrkupplung schließenden Kupplungsbetätigungsdruck versorgen kann.

Um die letztgenannte Steuerungsventilanordnung für die geschilderte Funktionsweise auszubilden, ist vorgesehen, dass eines der beiden Kupplungsregelventile einen kurzen Steuerschieber und einen langen Steuerschieber aufweist, wobei im Notbetrieb der Aktivierungsdruck auf den kurzen Steuerschieber leitbar ist, und der kurze Steuerschieber dann auf den langen Steuerschieber mit einer axialen Betätigungskraft wirkt. Das zweite Kupplungsregelventil verfügt demgegenüber nur über einen langen Steuerschieber und wird von dem Aktivierungsdruck nicht beaufschlagt.

In Weiterbildung der Steuerungsventilanordnung kann zudem vorgesehen sein, dass beide Kupplungsregelventile einen kurzen Steuerschieber und einen langen Steuerschieber aufweisen, wobei im Notbetrieb der Aktivierungsdruck auf den kurzen Steuerschieber desjenigen Kupplungsregelventils leitbar ist, mit dem über die zugeordnete Kupplungsbetätigungsvorrichtung eine Anfahrkupplung bisher geschlossen oder schlupfend gehalten wurde. Der kurze Steuerschieber wirkt dann in der beschriebenen Weise auf den langen Steuerschieber des betroffenen Kupplungsregelventils.

Gemäß einer weiteren Konkretisierung der letztgenannten Steuerungsventilanordnung für ein Doppelkupplungsgetriebe weist diese ein Kupplungswahlventil auf, mit welchem bei einer Aktivierung der Notbetriebsfunktion die zuletzt in Schließrichtung aktive Kupplungsbetätigungsvorrichtung die zugeordnete Kupplung weiter geschlossen oder schlupfend haltend betätigt wird bzw. der Aktivierungsdruck auf das betroffene Kupplungsregelventil geleitet wird.

Vorteilhaft ist das Kupplungswahlventil als Druckwaage ausgebildet, bei dem der Kupplungsbetätigungsdruck für die zweite Kupplungsbetätigungsvorrichtung zwei Druckräumen an den axialen Enden des Kupplungswahlventils zuführbar ist, wobei diese beiden Druckräume von einem durchmessergroßen Steuerkolben bzw. einem durchmesserkleinen Steuerkolben axial begrenzt werden, bei dem sich unmittelbar an den durchmesserkleinen Steuerkolben ein dritter Steuerkolben axial anschließt, dessen im Vergleich zu dem durchmesserkleinen Steuerkolben freie Differenzstirnfläche in einem Druckraum von dem Kupplungsbetätigungsdruck der ersten Kupplungsbetätigungsvorrichtung 4 beaufschlagbar ist, bei dem die zu dem durchmessergrößeren Steuerkolben weisende Stirnfläche des dritten Steuerkolbens sowie die zu dem dritten Steuerkolben weisende Stirnfläche des durchmessergrößeren Steuerkolbens in zugeordneten Druckräumen mit dem Aktivierungsdruck beaufschlagbar sind, und bei dem der Aktivierungsdruck in Abhängigkeit von der Stellung des Steuerschiebers des Kupplungswahlventils zu einem rückstellfederfernen Druckraum des ersten Kupplungsregelventils oder zu dem rückstellfederfernen Druckraum des zweiten Kupplungsregelventils leitbar ist.

Vorzugswiese weist dieses Kupplungswahlventil eine federbelastete Rastiervorrichtung auf, mit deren Hilfe auch bei Druckschwankungen oder schnellen Umschaltvorhängen eine Schaltposition sicher einnehmbar ist.

Schließlich kann vorgesehen sein, dass im Bereich des freien Endes eines langen Steuerschiebers des jeweiligen Kupplungsregelventils ein Druckraum mit dem jeweiligen Vorsteuerdruck beaufschlagbar ist, mit dem der Steuerschieber nach einer Deaktivierung der drehzahlabhängigen Selbsthaltefunktion des Selbsthalteventils soweit gegen die Rückstellkraft der auf diesen Steuerschieber wirkenden Rückstellfeder verschiebbar ist, dass erneut ein zu dem Kupplungsregelventil geführter Versorgungsdruck als Kupplungsbetätigungsdruck zur jeweiligen Kupplungsbetätigungsvorrichtung weiterleitbar ist.

Es sei hier zudem darauf hingewiesen, dass die Steuerungsventilanordnung hinsichtlich der Weiterleitung des Aktivierungsdrucks zu dem wenigstens einen Kupplungsregelventil mit gleicher Wirkung unterschiedlich ausgebildet sein kann. Entgegen der vorbeschriebenen Varianten kann daher auch vorgesehen sein, dass der Aktivierungsdruck zuerst auf das Aktivierungsventil, von dort zum Selbsthalteventil und von diesem zu dem zumindest einen Kupplungsregelventil geführt ist.

Die Erfindung wird nachfolgend anhand einer Zeichnung weiter erläutert, die drei Ausführungsbeispiele von erfindungsgemäß ausgebildeten Steuerungsventilanordnungen zeigt. Im Einzelnen zeigt
- Fig. 1: eine Steuerungsventilanordnung gemäß der Erfindung mit einer Selbsthaltehydraulik für eine Kupplungsbetätigungsvorrichtung,
- Fig. 2: ein Diagramm hinsichtlich des Verlaufs des Kupplungsbetätigungsdrucks für die Kupplungsbetätigungsvorrichtung gemäß Fig. 1,
- Fig. 3: eine Steuerungsventilanordnung ähnlich wie in Fig. 1, jedoch mit zwei Kupplungsregelventilen für zwei Kupplungsbetätigungsvorrichtungen, und
- Fig. 4: eine Steuerungsventilanordnung ähnlich wie in Fig. 3, jedoch zusätzlich mit einem Kupplungswahlventil.

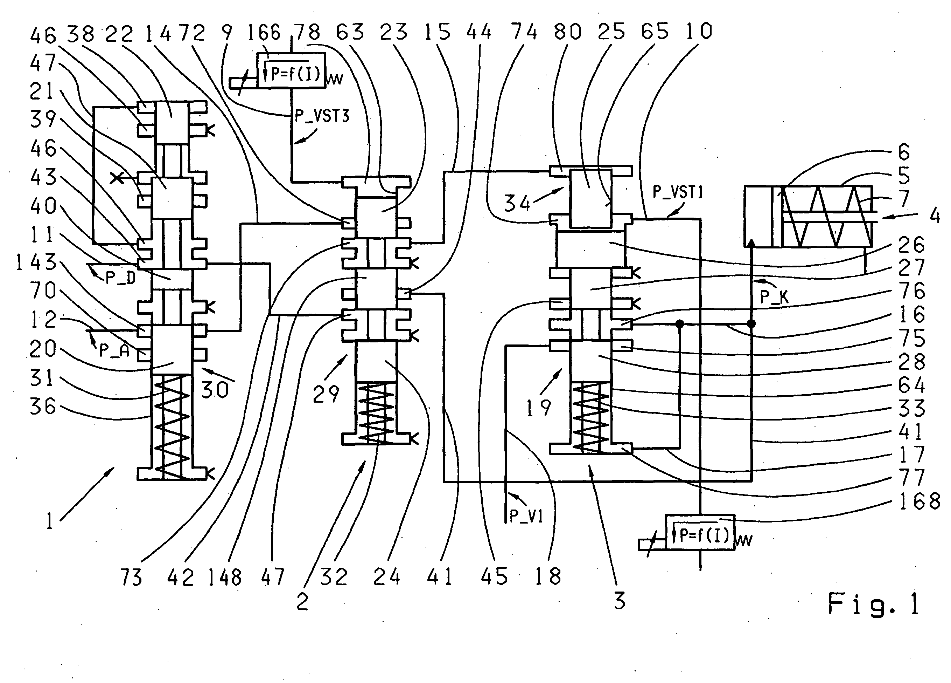

Die in Fig. 1 dargestellte Steuerungsventilanordnung umfasst ein Selbsthalteventil 1, ein Notbetrieb-Aktivierungsventil 2 (im Folgenden Aktivierungventil genannt), ein Kupplungsregelventil 3 sowie eine Kupplungsbetätigungsvorrichtung 4. Die Kupplungsbetätigungsvorrichtung 4 weist einen Zylinder 5 auf, in dem ein Kolben 6 im Bereich seiner Kolbenstange von einer gegen einen Kupplungsbetätigungsdruck P_K wirkenden Rückstellfeder 7 koaxial umschlungen und bei einer Druckbeaufschlagung seiner federfernen Stirnseite derart in eine Schließrichtung verschiebbar ist, dass eine Anfahrkupplung eines Automatgetriebes zur Drehmomentübertragung geschlossen wird.

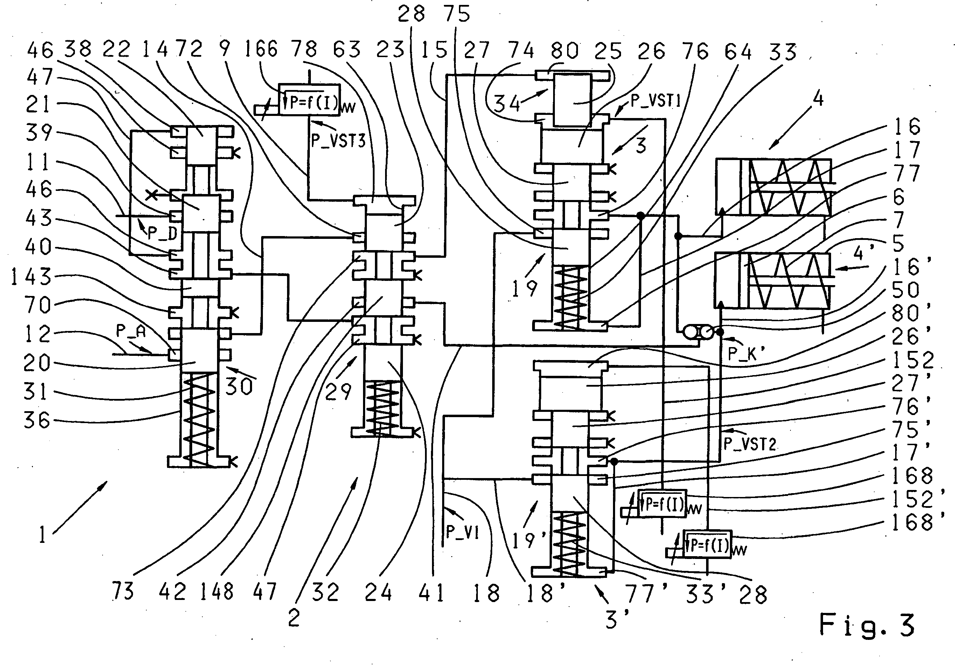

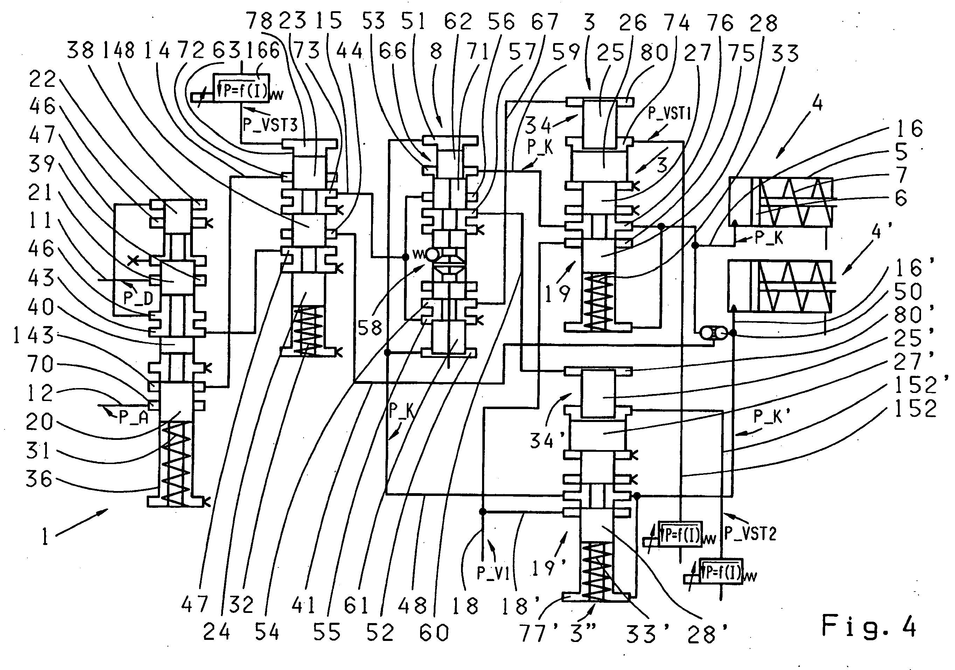

Die hier nicht gezeigte, dem Fachmann aber an sich bekannte Anfahrkupplung gehört zu einem Automatgetriebe, welches beispielsweise als Stufenautomat auf der Basis eines Planetengetriebes, als stufenlos sein Übersetzungsverhältnis änderndes Getriebe oder als lastschaltendes automatisiertes Schaltgetriebe ausgebildet sein kann. Für den Fall, dass die Steuerungsventilanordnung für ein Doppelkupplungsgetriebe ausgebildet sein soll, werden zwei Kupplungsregelventile sowie zwei Kupplungsbetätigungsvorrichtungen genutzt, worauf im Zusammenhang mit den Figuren 3 und 4 eingegangen wird.

Die genannten Ventile 1, 2 und 3 sind in einem nicht gezeigten Schieberkasten einer von einem elektronischen Steuerungsgerät ansteuerbaren elektrohydraulischen Steuerungsvorrichtung für das Getriebe angeordnet, wobei jedes Ventil mindestens einen Steuerschieber aufweist, welcher Druckräume öffnend, verbindend und/oder schließend von Hydraulikdrücken und/oder Federrückstellfederkräften axial bewegbar ist.

Das Selbsthalteventil 1 weist einen Steuerschieber 30 auf, der in einer Ventilbohrung 36 axial verschiebbar angeordnet ist. Der Steuerschieber 30 verfügt über vier zueinander beabstandete Steuerkolben 20, 21, 22 und 40, wobei eine Stirnseite des Steuerkolbens 20 von einer Rückstellfeder 31 mit einer Rückstellkraft beaufschlagt wird. Zudem wird einem durch den Steuerkolben 21 absperrbaren Druckraum 39 des Selbsthalteventils 1 über eine Leitung 11 ein Steuerdruck P_D zugeführt, dessen Druckhöhe von der Drehzahl des Fahrzeugantriebsmotors oder von der Getriebeabtriebsdrehzahl abhängt.

Des Weiteren wird einem durch den Steuerkolben 20 absperrbaren Druckraum 70 des Selbsthalteventils 1 über eine Leitung 12 ein Aktivierungsdruck P_A zugeführt, welcher im Notbetrieb des Getriebes nach einem Ausfall eines elektronischen Steuerungsgerätes dafür sorgt, dass eine drehmomentübertragende Anfahrkupplung des Getriebes durch schließende Betätigung der Kupplungsbetätigungsvorrichtung 4 so lange geschlossen bleibt, wie die drehzahlabhängige Steuerdruck hoch genug ist. Ein diesbezüglicher Druckgrenzwert hängt ab beispielsweise von der Abwürgdrehzahl des Fahrzeugantriebsmotors.

Hinsichtlich des Aufbaus des Aktivierungsventils 2 ist darauf hinzuweisen, dass dessen Steuerschieber 29 drei zueinander beabstandeten Steuerkolben 23, 148 und 24 aufweist, der in einer Bohrung 63 des genannten Schieberkastens axial verschiebbar angeordnet ist. Dabei wird eine Stirnseite des Steuerkolbens 24 von der Kraft einer Rückstellfeder 32 beaufschlagt.

Das Aktivierungsventil 2 wird im Normalbetrieb von einem Vorsteuerdruck P_VST3 axial beaufschlagt, der von einem von dem elektronischen Steuerungsgerät ansteuerbaren Druckregelventil 166 aus dem Hauptdruck der Hydrauliksteuerung bereitgestellt wird. Dieser Vorsteuerdruck P_VST3 wird über eine Leitung 9 zu einem rückstellfederfernen Druckraum 78 des Aktivierungsventils 2 geleitet, wo dieser auf die Stirnfläche eines Steuerkolbens 23 des Steuerschiebers 29 des Aktivierungsventils 2 wirkt.

Eine Leitung 14 verbindet zudem den Druckraum 70 bzw. 143 des Selbsthalteventils 1 mit einem Druckraum 72 des Aktivierungsventils 2, wobei dieser Druckraum 72 mittels des rückstellfederfernen Steuerkolbens 23 verschlossen oder bei Wegfall des Vorsteuerdrucks P_VST3 mit einem Druckraum 73 am Aktivierungsventil 2 hydraulisch verbunden werden kann.

Mit dem mittleren Steuerkolben 148 des Steuerschiebers 29 des Aktivierungsventils 2 kann eine Verbindung zwischen den Leitungen 41 und 42 zwischen dem Druckraum der Kupplungsbetätigungsvorrichtung 4 und einem Druckraum 43 am Selbsthalteventil 1 unterbrochen oder geöffnet werden.

Das Kupplungsregelventil 3 umfasst einen axial längeren Steuerschieber 19 mit drei Steuerkolben 26, 27 und 28 sowie einen axial kürzeren Steuerschieber 34, die in Bohrungen 64 und 65 des genannten Schieberkastens axialverschiebbar aufgenommen sind. Dabei ist der axial längere Steuerschieber 19 an einem Ende des Steuerkolbens 28 von einer Rückstellfeder 33 mit einer Rückstellkraft beaufschlagt.

Der axial kürzere Steuerschieber 34 umfasst einen Steuerkolben 25, dessen zu dem andern Steuerschieber 19 gewandtes Ende in einem Druckraum 74 von dem Vorsteuerdruck P_VST1 beaufschlagbar ist. Der Vorsteuerdruck P_VST1 wird von einem Druckregelventil 168 aus dem von einer nicht dargestellten Ölpumpe erzeugten Hauptdruck des Druckmittels eingestellt und dem Druckraum 74 über eine Leitung 10 zugeführt. Das Druckregelventil 168 ist von dem hier nicht dargestellten elektronischen Steuerungsgerät, vorzugsweise ein Getriebesteuerungsgerät, ansteuerbar. Zu der gegenüberliegenden Stirnseite des Kolbens 25 ist der Aktivierungsdruck P_A über eine Leitung 15 in den Druckraum 80 leitbar, welche mit dem Druckraum 73 an dem Aktivierungsventil 2 verbunden ist.

Der axial längere Steuerschieber 19 des Kupplungsregelventils 3 verfügt über die drei genannten Steuerkolben 26, 27 und 28, wovon die beiden rückstellfederfernen Kolben 26 und 27 axial unmittel benachbart zueinander angeordnet sind. Das freie und dem axial kürzeren Steuerschieber 34 gegenüberliegende Ende des Steuerkolbens 26 ist ebenfalls über den Druckraum 74 mit dem genannten Vorsteuerdruck P_VST1 beaufschlagbar, während das rückstellfederferne Ende des Steuerkolbens 28 einem Druckraum 75 zugeordnet ist, in den über eine Leitung 18 ein System- bzw. Versorgungsdruck P_V1 leitbar ist.

Dieser Druckraum 75 ist im Normalbetrieb durch entsprechende Ansteuerung des Kupplungsregelventils 3 über den Vorsteuerdruck P_VST1 mit einem axial benachbarten Druckraum 76 verbindbar, so dass ein geregelter Kupplungsbetätigungsdruck P_K, eingestellt durch den Steuerkolben 28, in diesem Druckraum 76 wirken kann. Der Druckraum 76 ist zudem über eine Leitung 16 mit dem Zylinder 5 der Kupplungsbetätigungsvorrichtung 4 sowie über eine Leitung 17 mit einem Druckraum 77 am Kupplungsregelventil 3 verbunden, welcher auch dessen Rückstellfeder 33 aufnimmt.

Die Funktionsweise der Steuerungsventilanordnung gemäß Fig. 1 ist nun folgende:

Im normalen Fahrbetrieb ist der Steuerschieber 30 des Selbsthalteventils 1 durch die Kraft der Rückstellfeder 31 in seine Grundstellung gebracht, bei der die Druckräume 38, 70 und 143 verschlossen sind. Zudem wirkt der Vorsteuerdruck P_VST3 im Druckraum 78 des Aktivierungsventils 2 derart, dass dessen Steuerschieber 29 gegen die Rückstellkraft der Rückstellfeder 32 soweit axial verschoben in der Bohrung 63 angeordnet ist, dass der Druckraum 72 von dem Druckraum 73 durch den Steuerkolben 23 getrennt ist. Eine Weiterleitung von Aktivierungsdruck P_A vom Aktivierungsventil 2 über die Leitung 15 zu dem Kupplungsregelventil 3 ist damit ebenfalls nicht möglich.

Außerdem wird der axial längere Steuerschieber 19 des Kupplungsregelventils 3 über die Leitung 10 derart mit dem Vorsteuerdruck P_VST1 beaufschlagt, dass eine Steuerkante des Steuerkolbens 28 den Druckraum 75 am Kupplungsregelventil 3 mehr oder weniger weit freigibt. Auf diese Weise kann in Abhängigkeit von der Höhe des Vorsteuerdrucks P_VST1 der Versorgungsdruck P_V1 zu einem Kupplungsbetätigungsdruck P_K geregelt werden, mit dem die Kupplungsbetätigungsvorrichtung 4 letztlich in eine die zugeordnete Kupplung öffnende, schlupfende oder schließende Stellung gebracht wird.

Zudem ist in Fig. 1 erkennbar, dass die der Rückstellfeder 33 zugewandte Stirnseite des Steuerkolbens 28 des Kupplungsregelventils 3 über den Druckraum 76 sowie die Leitungen 16 und 17 ebenfalls mit dem geregelten Kupplungsbetätigungsdruck P_K beaufschlagt wird.

Schließlich zeigt Fig. 1, dass die den Kupplungsbetätigungsdruck P_K führende Leitung 16 mit einer zu einem Druckraum 44 des Aktivierungsventils 2 führenden Leitung 41 verbunden ist. Im Normalbetrieb ist dieser Druckraum 44 durch den Steuerkolben 148 versperrt, so dass der Kupplungsbetätigungsdruck P_K nicht betätigungswirksam an dem Selbsthalteventil 1 anliegt.

Sofern beispielsweise durch eine Störung im elektronischen Steuerungsgerät oder durch einen Ausfall desselben bzw. der Druckregelventile die Vorsteuerdrücke P_VST1 und P_VST3 wegfallen oder sich zumindest stark reduzieren, bewegen sich die Steuerschieber 19 und 29 in ihrer Grundstellung, so dass die Kupplungsbetätigungsvorrichtung 4 ohne weitere Maßnahmen von dem Versorgungsdruck P_V1 und damit von dem Kupplungsbetätigungsdruck P_K abgeschnitten wäre. Druckmittel mit diesem zuletzt vorliegenden Kupplungsbetätigungsdruck P_K würde dann durch einen von dem Steuerkolben 27 freigegebenen Druckraum 45 in einen Druckmitteltank geleitet und die Kupplungsbetätigungsvorrichtung 4 damit druckentlastet.

Durch den erfindungsgemäßen Aufbau der Steuerungsventilanordnung gemäß Fig. 1 gelangt jedoch der Kupplungsbetätigungsdruck P_K über die Leitung 41, den in der Notbetriebssituation geöffneten Druckraum 44 des Aktivierungsventils 2 und die Leitung 42 zu dem Druckraum 43 des Selbsthalteventils 1. Von dort gelangt der Kupplungsbetätigungsdruck P_K über einen benachbarten Druckraum 46 sowie eine Leitung 47 in den rückstellfederfernen Druckraum 38 des Selbsthalteventils 1 und wirkt dort auf die freie Stirnseite des Steuerkolbens 22.

Wenn nun der Kupplungsbetätigungsdruck P_K zum Zeitpunkt des Ausfalls des elektronischen Steuerungsgerätes wegen einer geschlossenen oder schlupfenden Kupplung noch hoch genug ist, so wird durch den in dem rückstellfederfernen Druckraum 38 anliegenden Kupplungsbetätigungsdruck P_K der Steuerschieber 30 gegen die Kraft der Rückstellfeder 31 so weit ausgelenkt, dass der drehzahlabhängige Steuerdruck P_D im Druckraum 39 des Selbsthalteventils 1 auf die rückstellfederferne Stirnseite des Steuerkolbens 21 drückt.

Sofern nun der drehzahlabhängige Steuerdruck P_D für die Aktivierung und Aufrechterhaltung des hydraulischen Notbetriebs hoch genug ist, so bleibt der Steuerschieber 30 in einer Stellung, in der Druckmittel mit dem Aktivierungsdruck P_A von der Leitung 12 über die Druckräume 70 und 143 am Selbsthalteventil 1, die Leitung 14, die Druckräume 72 und 73 des Aktivierungsventils 2 sowie die Leitung 15 zu dem rückstellfederfernen Druckraum 80 am Kupplungsbetätigungsventil 3 gelangt. Dadurch drückt der kurze Steuerschieber 34 des Kupplungsbetätigungsventils 3 gegen die Kraft der Rückstellfeder 33 axial auf den langen Steuerschieber 19, so dass schließlich dessen Steuerkolben 28 den Druckraum 75 freigibt und Druckmittel mit dem Druck P_V1 bzw. P_K in den Druckraum der Kupplungsbetätigungsvorrichtung 4 gelangt.

Zudem trennt in dieser Situation der Steuerkolben 21 des Selbsthalteventils 1 dessen Druckraum 46 von dem Druckraum 43, so dass kein Kupplungsbetätigungsdruck P_K mehr in den rückstellfederfernen Druckraum 38 des Selbsthalteventils 1 gelangen kann. Dadurch, dass sich auch der Kolben 22 des Steuerschiebers 30 des Selbsthalteventils 1 in Richtung zu der Rückstellfeder 31 bewegt hat, wurde zudem der Druckraum 38 mit dem Druckraum 46 verbunden, durch welchen das eingeschlossene Druckmittel mit dem letzten Kupplungsbetätigungsdruck P_K in einen Druckmitteltank leitbar ist.

Sobald der drehzahlabhängige Steuerdruck P_D jedoch soweit abgefallen ist, dass dieser den Steuerschieber 30 nicht mehr in der beschriebenen Position halten kann, bewegt sich derselbe in seine Grundstellung zurück, so dass die Weiterleitung von Aktivierungsdruck P_A zu dem Aktivierungsventil 2 und von dort zu dem Kupplungsregelventil 3 unterbrochen wird. Als Folge davon gelangen der kurze und der lange Steuerschieber 34 bzw. 19 in ihre Grundstellung zurück, wobei der Steuerkolben 28 den den Versorgungsdruck P_V1 führenden Druckraum 75 absperrt sowie der Steuerkolben 27 den entleerbaren Druckraum 45 zur Druckentlastung des Druckraums der Kupplungsbetätigungsvorrichtung 4 freigibt. Dadurch ist eine Notbetriebsphase mit einer nun geöffneten Anfahrkupplung beendet.

Wie Fig. 1 verdeutlicht, kann die Kupplungsbetätigungsvorrichtung 4 bei einem Wiederanstieg des drehzahlabhängigen Steuerdrucks P_D nach einem Notbetrieb ohne Anlegen der Vorsteuerdrücke P_VST1 und P_VST3 zunächst nicht wieder in ihre Schließstellung gebracht werden, so dass der sicherheitstechnische Vorteil erreicht ist, dass ein diesbezügliches Kraftfahrzeug bei geöffneter Anfahrkupplung abgeschleppt werden kann, ohne dass der durch Rollen der Fahrzeugräder in der Leitung 11 gegebenenfalls anliegende drehzahlabhängige Steuerdruck P_D zu einem Schließen der Anfahrkupplung führen würde.

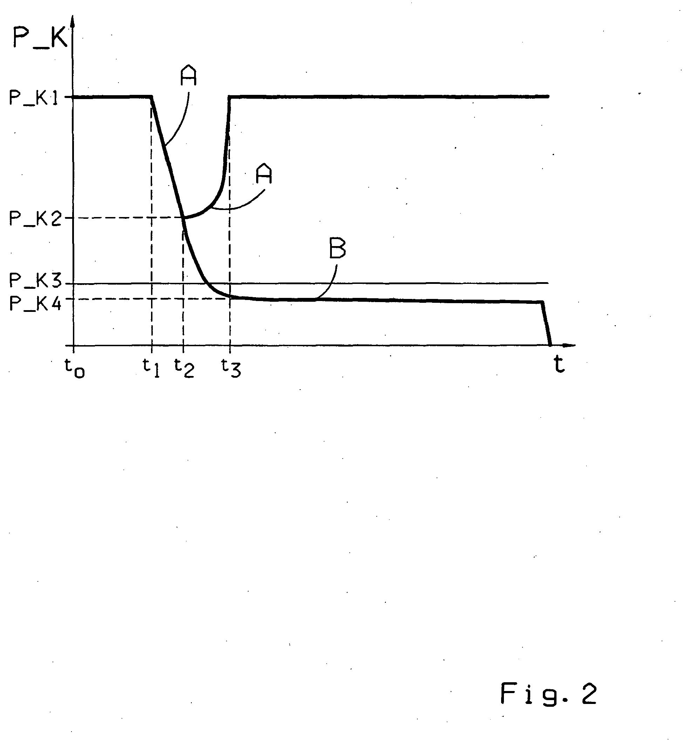

Zur weiteren Veranschaulichung der Wirkungsweise der Steuerungsventilanordnung gemäß Fig. 1 zeigt Fig. 2 den zeitlichen Verlauf des Kupplungsbetätigungsdrucks P_K zur Betätigung der Kupplungsbetätigungsvorrichtung 4. Beginnend im Zeitpunkt t₀ liegt ein Kupplungsbetätigungsdruck P_K1 im Druckraum der Kupplungsbetätigungsvorrichtung 4 an, der die zugeordnete Anfahrkupplung geschlossen hält. Zum Zeitpunkt t₁ fällt des elektronische Steuerungsgerät für diese Steuerungsventilanordnung aus oder die Vorsteuerdrücke P_VST1 und P_VST3 verringern sich aus einem anderen nicht gewollten Grund unter einen vorbestimmten Solldruck.

In einer ersten angenommenen Steuerungsfunktion gemäß dem Kurvenverlauf A_A ist der drehzahlabhängige Steuerdruck P_D höher als ein vorbestimmter Druckgrenzwert. Dies bedeutet, dass entweder die Drehzahl des Fahrzeugsmotors über der Abwürgdrehzahl liegt, oder dass die Getriebeabtriebsdrehzahl, also die Fahrgeschwindigkeit, einen Wert aufweist, der oberhalb eines vorbestimmten Grenzwertes liegt.

Da der Vorsteuerdruck P_VST1 in dieser Betriebssituation nun nicht mehr auf das Kupplungsregelventil 3 wirkt, bewegt sich dessen Steuerschieber 19 federbelastet zu seiner Grundstellung, wodurch die Zufuhr des Versorgungsdrucks P_V1 über das Kupplungsregelventil 3 zu der Kupplungsbetätigungsvorrichtung 4 unterbrochen wird. Aus diesem Grund ist in einem Umsteuerzeitraum t₁ bis t₂ des Selbsthalteventils 1 ein Rückgang des Kupplungsbetätigungsdrucks auf den Wert P_K2 festzustellen. Da mit Beginn des Druckabfalls ab dem Zeitpunkt t₁ die Nothaltefunktion der Steuerungsventilanordnung dadurch ausgelöst wurde, dass der über das Aktivierungsventil 2 zu dem Selbsthalteventil 1 geleitete Kupplungsbetätigungsdruck P_K höher als der ein Grenz-Kupplüngsbetätigungsdruck P_K3 ist, wird der Steuerschieber 30 des Selbsthalteventils 1 durch den Kupplungsbetätigungsdruck P_K gegen die Kraft seiner Rückstellfeder 31 verschoben.

Weil der drehzahlabhängige Steuerdruck P_D in diesem Zeitraum t₁. bis t2 hoch genug ist, gelangt der Aktivierungsdruck P_A zu dem Kupplungsbetätigungsventil 3, so dass ab dem Zeitpunkt t₂ der Kupplungsbetätigungsdruck P_K wieder ansteigt. Der Ausgangswert P_K1 wird zum Zeitpunkt t₃ erreicht, so dass die Anfahrkupplung in dieser Notbetriebssituation solange geschlossen bleibt, bis der drehzahlabhängige Steuerdruck P_D unter den vorbestimmten Druckgrenzwert abfällt.

In einer zweiten angenommenen Steuerungsfunktion, deren Kupplungsbetätigungsdruckverlauf A-B die Fig. 2 ebenfalls zeigt, ist der drehzahlabhängige Steuerdruck P_D niedriger als der vorbestimmte Druckgrenzwert für denselben. Dies bedeutet, dass entweder die Drehzahl des Fahrzeugsmotors unter der deren Abwürgdrehzahl liegt, oder dass die Getriebeabtriebsdrehzahl einen Wert aufweist, der unterhalb eines vorbestimmten Grenzwertes liegt. In diesem Betriebsfall reicht der drehzahlabhängige Steuerdruck P_D nicht aus, um den Steuerschieber 30 gegen die Kraft seiner Rückstellfeder 31 ausgelenkt zu halten. Wegen des weiter absinkenden Kupplungsbetätigungsdrucks P_K wird der Steuerschieber 30 des Selbsthalteventils 1 durch die Rückstellfeder 31 wieder in seine Grundstellung zurückgeschoben, so dass kein Aktivierungsdruck P_A mehr über das Aktivierungsventil 2 zu dem Kupplungsregelventil 3 gelangen kann. Die Selbsthaltfunktion der Steuerungsventilanordnung gemäß Fig. 1 ist damit spätestens zum Zeitpunkt t₃ und einem Kupplungsbetätigungsdruck P_K4 deaktiviert, welcher sich anschließend bei öffnender Anfahrkupplung weiter reduziert.

Die in Fig. 3 dargestellte Steuerungsventilanordnung ist zur Betätigung von zwei Kupplungsbetätigungsvorrichtungen 4 und 4' vorgesehen, mit denen zwei nicht dargestellte Anfahrkupplungen eines Doppelkupplungsgetriebes mittels den Kupplungsbetätigungsdrücken P_K bzw. P_K' betätigbar sind. Im Unterschied zur Steuerungsventilanordnung gemäß Fig. 1 steuern das Selbsthalteventil 1 und das Aktivierungsventil 2 wahlweise zwei Kupplungsbetätigungsventile 3 bzw. 3' so an, dass die höher priorisierte Anfahrkupplung der beiden Teilgetriebe des Doppelkupplungsgetriebes auch in der geschilderten Notbetriebssituation geschlossen gehalten beziehungsweise geschlossen wird, wenn die Vorsteuerdrücke P_VST3, P_VST1 und P_VST2 weggefallen sind sowie der drehzahlabhängige Steuerdruck P_D ausreichend hoch ist.

In dem in Fig. 3 gezeigten Ausführungsbeispiels ist die von der Kupplungsbetätigungsvorrichtung 4 betätigbare Anfahrkupplung die höher priorisierte Anfahrkupplung, welches vor allem dadurch zum Ausdruck kommt, dass das erste Kupplungsregelventil 3 den kurzen Steuerschieber 34 aufweist, mit dem dieses Kupplungsregelventil 3 über den zuführbaren Aktivierungsdruck P_A auch im Notbetrieb aktivierbar ist. Das zweite Kupplungsregelventil 3' für die zweite Kupplungsbetätigungsvorrichtung 4' weist einen solchen kurzen Steuerschieber 34 nicht auf. Aufgrund dieses Aufbaus ist das erste der beiden Teilgetriebe speziell auch für den Notbetrieb nutzbar, wofür dann stets bestimmte besonders geeignet Getriebegänge zur Verfügung stehen.

Von besonderer Bedeutung bei der Steuerventilanordnung gemäß Fig. 3 ist ein Wechselventil 50, mit dem immer der jeweils höhere Kupplungsbetätigungsdruck P_K oder P_K' einer der beiden Kupplungsbetätigungsvorrichtung 4, 4' in der bereits geschilderten Weise über das Aktivierungsventil 2 zu dem Selbsthalteventil 1 geleitet wird.

Nachfolgend werden der besondere Aufbau und die besondere Wirkungsweise der Steuerungsventilanordnung gemäß Fig. 3 näher erläutert:
In der hier zunächst betrachteten normalen Betriebssituation eines Kraftfahrzeuges mit einem Doppelkupplungsgetriebe ist die erste Anfahrkupplung geschlossen während die zweite Anfahrkupplung geöffnet ist. Dazu liegt an dem Druckraum 74 des ersten Kupplungsregelventils 3 der von dem Druckregelventil 168 eingestellte Vorsteuerdruck P_VST1 an, welcher dessen Steuerschieber 19 soweit gegen die Kraft der Rückstellfeder 33 verschoben hat, dass der Versorgungsdruck P_V1 durch die Stellung des Steuerkolbens 28 zu einem derart hohen Kupplungsbetätigungsdruck P_K eingestellt hat, dass die erste Kupplungsbetätigungsvorrichtung 4 die erste Anfahrkupplung geschlossen hält.

In dieser Situation ist das Druckregelventil 168' so von dem elektronischen Steuerungsgerät angesteuert, dass kein oder nur ein sehr geringer Vorsteuerdruck P_VST2 in den Druckraum 80' des zweiten Kupplungsregelventils 3' gelangt. Dadurch befindet sich dessen Steuerschieber 19' in seiner Grundstellung, so dass kein Druckmittel unter dem Versorgungsdruck P_V1 von der Leitung 18' bzw. dem Druckraum 75' des zweiten Kupplungsregelventils 3' in die zu dem Druckraum der zweiten Kupplungsbetätigungsvorrichtung 4' führenden Leitung 16' gelangen kann. Die zweite Anfahrkupplung ist daher geöffnet.

Zwischen den beiden Leitungen 16 und 16' ist das bereits erwähnte Wechselventil 50 angeordnet, dessen Ausgang mit einer Leitung 41 verbunden ist, welche wie schon beschrieben zu dem Druckraum 44 des Aktivierungsventils 2 führt. Das Wechselventil 50 ist in diesem Ausführungsbeispiel nun so aufgebaut, dass dieses immer nur den höheren Kupplungsbetätigungsdruck P_K oder P_K' weiterleitet. In dem hier betrachteten Betriebsfall ist dies der Kupplungsbetätigungsdruck P_K für die erste Kupplungsbetätigungsvorrichtung 4. Im Normalbetrieb wird dieser Kupplungsbetätigungsdruck P_K daher von dem Aktivierungsventil 2 bei dort anliegendem Vorsteuerdruck P_VST3 nicht zu dem Aktivierungsventil 1 weitergeleitet.

Der Kupplungsbetätigungsdruck P_K gelangt erst bei einem Ausfall des elektronischen Steuergeräts und Wegfall des Vorsteuerdrucks P_VST3 in der schon im Zusammenhang mit Fig. 1 erläuterten Weise über das Aktivierungsventil 2 in den rückstellfederfernen Druckraum 38 des Selbsthalteventils 1, wo dieser dessen Steuerschieber 30 axial soweit verschiebt, dass der drehzahlabhängige Steuerdruck P_D im Druckraum 39 axial auf den Steuerkolben 21 des Selbsthalteventils 1 wirken kann. Sofern der drehzahlabhängige Steuerdruck P_D hoch genug ist, wird der Steuerschieber 30 des Selbsthalteventils 1 in dieser Position gehalten, so der Aktivierungsdruck P_A in die Leitung 14, in die Druckräumen 72 und 73 des Aktivierungsventils 2, in die Leitung 15 und in den Druckraum 80 des ersten Kupplungsregelventils 3 gelangt. Dadurch drückt dessen kleiner Steuerschieber 34 auf den großen Steuerschieber 19 derart, dass der Steuerkolben 28 den Druckraum 75 zum Druckraum 76 öffnet, in dessen Folge der Versorgungsdruck P_V1 als Kupplungsbetätigungsdruck P_K durch die Leitung 16 in den Druckraum der ersten Kupplungsbetätigungsvorrichtung 3 gelangen kann. Demnach bleibt die erste Kupplungsbetätigungsvorrichtung 4 in Schließstellung und die zuletzt drucklose zweite Kupplungsbetätigungsvorrichtung 4' der zweiten Anfahrkupplung auch weiterhin drucklos.

In demjenigen Betriebsfall, in dem das zweite Teilgetriebe des Doppelkupplungsgetriebes durch eine geschlossene zweite Anfahrkupplung vor dem Ausfall des elektronischen Steuerungsgerätes im Antriebsstrang aktiv eingebunden ist, liegt der durch das Druckregelventil 168' eingestellte Vorsteuerdruck P_VST2 zugeführt über die Leitung 152' im Druckraum 80' des zweiten Kupplungsregelventils 3' derart an, dass dessen einziger Steuerschieber 19' soweit gegen die Kraft der Rückstellfeder 33' axial verschoben ist, dass der Versorgungsdruck P_V1 durch die Leitung 18', die Druckräume 75' und 76' sowie die Leitung 16' als Kupplungsbetätigungsdruck P_K' in den Druckraum der zweiten Kupplungsbetätigungsvorrichtung 4' gelangt und so die zweite Anfahrkupplung geschlossen hält.

Ergänzend soll an dieser Stelle darauf hingewiesen werden, dass gemäß Fig. 3 der Kupplungsbetätigungsdruck P_K, P_K' über die Leitung 17, 17' auch in den rückstellfederseitigen Druckraum 77, 77' des jeweiligen Kupplungsregelventils 3, 3' geführt ist, so dass der Kupplungsbetätigungsdruck P_K, P_K' gut regelbar ist.

Beim Ausfall des elektronischen Steuerungsgeräts bzw. beim Wegfall der Vorsteuerdrücke P_VST1, P_VST2 und P_VST3 wird der Kupplungsbetätigungsdruck P_K' für das zweite Kupplungsbetätigungsventil 4' über das Wechselventil 50, die Leitung 41, die Druckräume 44 und 47 des Aktivierungsventils 3, die Leitung 42, die Druckräume 43 sowie 46 und die Leitung 47 in den rückstellfederfernen Druckraum 38 des Selbsthalteventils 1 geführt. Auch hierbei wird der Steuerschieber 30 axial soweit verschoben, dass der drehzahlabhängige Steuerdruck P_D betätigungswirksam in den Druckraum 39 gelangen kann.

Solange dieser drehzahlabhängige Steuerdruck P_D ausreichend hoch ist, um den Steuerschieber 30 in dieser Position zu halten, gelangt der Aktivierungsdruck P_A in der bereits beschriebenen Weise über das Selbsthalteventil 1 und das Aktivierungsventil 2 zu dem Druckraum 80 des ersten Kupplungsregelventil 3, wodurch letztlich dessen großer Steuerschieber 19 soweit axial ausgelenkt wird, dass Versorgungsdruck P_V1 als Kupplungsbetätigungsdruck P_K zu der ersten Kupplungsbetätigungsvorrichtung 4 gelangt und die erste Anfahrkupplung schließt.

Im weiteren zeitlichen Verlauf fällt der Kupplungsbetätigungsdruck P_K' an der zweiten Kupplungsbetätigungsvorrichtung 4' ab, da durch den Wegfall des Vorsteuerdrucks P_VST2 das zweite Kupplungsregelventil 3' keinen Kupplungsbetätigungsdruck P_K' mehr erzeugt. Sobald der Kupplungsbetätigungsdruck P_K höher ist als der Kupplungsbetätigungsdruck P_K' schaltet das Wechselventil 50 um, so dass dann der Kupplungsbetätigungsdruck P_K zu dem dann von dem Steuerkolben 21 verschlossenen Druckraum 43 des Selbsthalteventils 1 gelangt.

Eine letzte Variante der Steuerungsventilanordnung gemäß der Erfindung ist in Fig. 4 dargestellt. Im Vergleich zu der Steuerungsventilanordnung nach Fig. 3 ist diese zwar auch zur wechselweisen Betätigung der beiden Kupplungsbetätigungsvorrichtungen 4 und 4' für die beiden Anfahrkupplungen eines Doppelkupplungsgetriebes konstruiert, jedoch ist deren Aufbau nun so, dass immer die zuletzt geschlossene Anfahrkupplung auch für den mehrfach geschilderten Notbetrieb geschlossen gehalten oder aus dem Schlupfbetrieb kommend geschlossen wird:
Dazu weist die Steuerungsventilanordnung gemäß Fig. 4 zwei nun identische Kupplungsregelventile 3 und 3" auf, welche im Fall des Notbetriebs von einem Kupplungswahlventil 8 derart ansteuerbar sind, dass die zuletzt geschlossenen Anfahrkupplung auch geschlossen bleibt bzw. aus einem Schlupfbetrieb in die geschlossenen Stellung überführt wird. Dazu ist das Kupplungswahlventil 8 als Druckwaage ausgebildet, auf deren Druckräume 55 sowie 56 bei geöffnetem Selbsthalteventil 1 und geöffnetem Aktivierungsventil 2 der Aktivierungsdruck P_A wirken kann, auf deren axial außen liegenden Druckräumen 51 und 52 der Kupplungsbetätigungsdruck P_K' der zweiten Kupplungsbetätigungsvorrichtung 4' wirkt, und auf deren Druckraum 53 der Kupplungsbetätigungsdruck P_K der ersten Kupplungsbetätigungsvorrichtung 4 wirkt.

In Abhängigkeit von den Druckverhältnissen an diesem Kupplungswahlventil 8 wird der Steuerschieber 66 des Kupplungswahlventils 8 derart verschoben, dass in einer Notbetriebssituation der Aktivierungsdruck P_A über den Druckraum 54 des Kupplungswahlventils 8 und eine Leitung 67 dann zu dem Druckraum 80 des ersten Kupplungsregelventils 3 geleitet wird, wenn zuletzt vor dem Wegfall der Vorsteuerdrücke P_VST1, P_VST2 und P_VST3 die erste Anfahrkupplung geschlossen oder schlupfend betätigt war. Sofern die zweite Anfahrkupplung geschlossen oder schlupfend betätigt war, so leitet das Kupplungswahlventil 8 den Aktivierungsdruck P_A über den Druckraum 57 und die Leitung 60 zu dem Druckraum 80' des zweiten Kupplungsregelventils 3', so dass die zweite Anfahrkupplung geschlossen bleibt oder aus dem Schlupfbetrieb in den geschlossenen Zustand überführt wird.

Diese Funktionsweise wird nachfolgend für denjenigen Betriebsfall im Detail erläutert, bei dem im Normalbetrieb zunächst die erste Anfahrkupplung schlupfend oder vollständig geschlossen ist. In dieser Situation liegt im Druckraum des Zylinders 5 der Kupplungsbetätigungsvorrichtung 4 der Kupplungsbetätigungsdruck P_K an, während eine diesbezügliche Druckversorgung des Druckraumes der zweiten Kupplungsbetätigungsvorrichtung 4' durch das Nichtanliegen des Vorsteuerdruck P_VST2 am zweiten Kupplungsregelventil 3" unterbunden ist. Daher leitet das Wechselventil 50 den Kupplungsbetätigungsdruck P_K über die Leitung 41 an das Aktivierungsventil 2 weiter.

Bei einem störungsbedingten Wegfall des Vorsteuerdrucks P_VST3 wird dieser Kupplungsbetätigungsdruck P_K über das dann geöffnete Aktivierungsventil 2 an den rückstellfederfernen Druckraum 38 des Selbsthalteventils 1 geleitet, wodurch dessen Steuerschieber 30 soweit verschoben wird, dass der drehzahlabhängige Steuerdruck P_D axial auf den Steuerkolben 21 des Selbsthalteventils 1 wirken kann. Sofern dieser drehzahlabhängige Steuerdruck P_D hoch genug ist, und damit auch die Motordrehzahl über der Abwürgdrehzahl liegt, wird der Aktivierungsdruck P_A über das Selbsthalteventil 1 und das geöffnete Aktivierungsventil 2 zu dem Kupplungswahlventil 8 geleitet, wo es in dessen Druckräume 55 und 56 gelangt.

In den Druckräumen 51 und 52 des Kupplungswahlventils 8 liegt, zugeführt über die Leitungen 48 und 49, der niedrigere Kupplungsbetätigungsdruck P_K' des zweiten Kupplungsbetätigungsventils 3" an, wobei diese beiden Druckräume 51 und 52 an den gegenüberliegenden Enden derjenigen Bohrung des Kupplungswahlventils 8 ausgebildet sind, in der der Steuerschieber 66 dieses Ventils 8 verschiebbar angeordnet ist. Der Steuerschieber 66 verfügt an seinem einen axialen Ende über einen Steuerkolben 61, auf dessen freie Stirnseite der Druck im Druckraum 52 wirkt, während auf die freie Stirnseite des axial gegenüber liegenden Steuerkolbens 62 des Steuerschiebers 66 der Druck im Druckraum 51 wirkt. Unmittelbar benachbart zu dem Steuerkolben 62 ist im Vergleich zu diesem ein im Durchmesser etwas größerer Steuerkolben 71 am Steuerschieber 66 ausgebildet, auf dessen zum Steuerkolben 62 weisenden freien Stirnfläche der in den Druckraum 53 zugeführte Kupplungsbetätigungsdruck P_K wirkt.

Hinsichtlich des Steuerkolbens 61 an der axial gegenüberliegenden Seite des Steuerschiebers 66 sein darauf hingewiesen, dass mit diesem in einer seiner beiden Endlagen der Druckraum 55 derart geöffnet werden kann, dass eine Druckmittelverbindung zwischen diesem Druckraum 55 und dem Druckraum 54 freigegeben wird, so dass bei einer diesbezüglichen Stellung des Steuerschiebers 66 der Aktivierungsdruck P_A über die Leitung 67 zu dem Druckraum 80 des ersten Kupplungsregelventils 3 weiterleitbar ist.

Sofern der Steuerschieber 66 des Kupplungswahlventils 8 sich in der anderen Endlage befindet, ist die Verbindung zwischen den beiden Druckräumen 54 und 55 geschlossen, während durch den Steuerkolben 71 eine Druckverbindung zwischen den Druckräumen 56 und 57 geöffnet ist. Durch diesen Druckraum 57 gelangt der Aktivierungsdruck P_A über die Leitung 60 zu dem Druckraum 80' des zweiten Druckregelventils 3", so dass dieses öffnet und den Versorgungsdruck P_V1 als Kupplungsbetätigungsdruck P_K' in den Druckraum der zweiten Kupplungsbetätigungsvorrichtung 4' leitet.

Zudem ist das Kupplungswahlventil 8 mit einer Rastiervorrichtung 58 mit einer federbelasteten Kugel ausgestattet, welche sicherstellt, dass trotz gegebenenfalls auftretender Druckschwankungen eindeutige Aktivierungs- bzw. Deaktivierungszustände für die beiden Kupplungsregelventile 3 und 3" geschaffen werden.

Dieses Kupplungswahlventil 8 arbeite nun durch den geschilderten grundsätzlichen Aufbau sowie durch die Dimensionierung der dem Druckmittel ausgesetzten Flächen der Steuerkolben im Sinne einer Druckwaage derart, dass die vor dem beschrieben Störfall gerade geschlossene oder im Schlupfbetrieb gehaltene Kupplung auch im Notfallbetrieb geschlossen bleibt bzw. in den geschlossenen Zustand überführt wird.

### Bezugszeichen

- 1: Selbsthalteventil
- 2: Aktivierungsventil
- 3, 3', 3": Kupplungsregelventil
- 4, 4': Kupplungsbetätigungsvorrichtung
- 5, 5': Zylinder
- 6, 6': Kupplungskolben
- 7, 7': Rückstellfeder
- 8: Kupplungswahlventil
- 9: Leitung Vorsteuerdruck P_VST3
- 10: Leitung Vorsteuerdruck P_VST1
- 11: Leitung drehzahlabhängiger Druck P_D
- 12: Leitung Aktivierungsdruck P_A zum Selbsthalteventil
- 14: Leitung Selbsthalteventil-Aktivierungsventil
- 15: Leitung Aktivierungsventil-Kupplungsregelventil
- 16: Leitung Kupplungsregelventil - Kupplungsbetätigungsvorrichtung
- 16': Leitung Kupplungsregelventil - Kupplungsbetätigungsvorrichtung
- 17, 17': Leitung Kupplungsregelventil - Kupplungsbetätigungsvorrichtung
- 18, 18': Leitung Versorgungsdruck
- 19, 19': Steuerschieber im Kupplungsregelventil
- 20: Steuerkolben im Selbsthalteventil
- 21: Steuerkolben im Selbsthalteventil
- 22: Steuerkolben im Selbsthalteventil
- 23: Steuerkolben im Aktivierungsventil
- 24: Steuerkolben im Aktivierungsventil
- 25, 25': Steuerkolben im Kupplungsregelventil
- 26, 26': Steuerkolben im Kupplungsregelventil
- 27, 27': Steuerkolben im Kupplungsregelventil
- 28, 28': Steuerkolben im Kupplungsregelventil
- 29: Steuerschieber im Aktivierungsventil
- 30: Steuerschieber im Selbsthalteventil
- 31: Rückstellfeder im Selbsthalteventil
- 32: Rückstellfeder im Aktivierungsventil
- 33, 33': Rückstellfeder im Kupplungsregelventil
- 34, 34': kurzer Steuerschieber im Kupplungsregelventil
- 36: Ventilbohrung des Selbsthalteventils
- 38: Druckraum im Selbsthalteventil
- 39: Druckraum im Selbsthalteventil
- 40: Steuerkolben am Selbsthalteventil
- 41: Leitung
- 42: Leitung
- 43: Druckraum am Selbsthalteventil
- 44: Druckraum am Aktivierungsventil
- 45: Druckraum am Kupplungsregelventil
- 46: Druckraum am Selbsthalteventil
- 47: Druckraum im Aktivierungsventil
- 48: Leitung Kupplungsregelventil 3' - Kupplungswahlventil
- 49: Leitung Kupplungsregelventil 3' - Kupplungswahlventil
- 50: Wechselventil
- 51: Druckraum Kupplungswahlventil
- 52: Druckraum Kupplungswahlventil
- 53: Druckraum Kupplungswahlventil
- 54: Druckraum Kupplungswahlventil
- 55: Druckraum Kupplungswahlventil
- 54: Druckraum Kupplungswahlventil
- 55: Druckraum Kupplungswahlventil
- 56: Druckraum Kupplungswahlventil
- 57: Druckraum Kupplungswahlventil
- 58: Rastiervorrichtung am Kupplungswahlventil
- 59: Leitung
- 60: Leitung
- 61: Steuerkolben am Kupplungswahlventil
- 62: Steuerkolben am Kupplungswahlventil
- 63: Bohrung für Steuerschieber im Aktivierungsventil
- 64: Bohrung für langen Steuerschieber im Kupplungsregelventil
- 65: Bohrung für kurzen Steuerschieber im Kupplungsregelventil
- 66: Steuerschieber des Kupplungswahlventils
- 67: Leitung Kupplungswahlventil - Druckraum 80
- 70: Druckraum am Selbsthalteventil
- 71: Steuerkolben am Kupplungswahlventil
- 72: Druckraum am Aktivierungsventil
- 73: Druckraum am Aktivierungsventil
- 74: Druckraum am Kupplungsregelventil
- 75, 75': Druckraum am Kupplungsregelventil
- 76, 76': Druckraum am Kupplungsregelventil
- 77, 77': Druckraum am Kupplungsregelventil
- 78, 78': Druckraum am Aktivierungsventil
- 80, 80': Druckraum am Kupplungsregelventil
- 81: Leitung
- 82: Leitung
- 83: Leitung
- 84: Leitung
- 85: Leitu ng
- 86: Druckraum
- 87: Druckraum
- 88: Druckraum
- 89: Leitung
- 143: Druckraum am Selbsthalteventil
- 146: Leitung
- 147: entleerbarer Druckraum am Selbsthalteventil
- 148: Steuerkolben am Selbsthalteventil
- 152, 152': Leitung P_VST1
- 166: elektrisch betätigbares Druckregelventil
- 168, 168': elektrisch betätigbares Druckregelventil

- P_A: Aktivierungsdruck
- P_D: drehzahlabhängiger Steuerdruck
- P_K, P_K': Kupplungsbetätigungsdruck
- P_K1 - P_K4: Kupplungsbetätigungsdrücke
- P_V1: Versorgungsdruck
- P_V2: Vorsteuerdruck
- P_VST1: Vorsteuerdruck
- P_VST3: Vorsteuerdruck

## Patentansprüche

1. Steuerungsventilanordnung zur Betätigungssteuerung zumindest einer Anfahrkupplung eines Automatgetriebes eines Kraftfahrzeuges, mit wenigstens einem Kupplungsregelventil (3, 3', 3"), über das ein Versorgungsdruck (P_V1) in einen Druckraum einer zugeordneten Kupplungsbetätigungsvorrichtung (4, 4') leitbar ist,
mit einem Druckregelventil (166), welches von einem elektronischen Steuerungsgerät ansteuerbar ist und zumindest ein Steuerungsventil der Steuerungsventilanordnung mit einem Vorsteuerdruck (P_VST3) versorgt,
und mit einer Selbsthaltehydraulik, mit deren Hilfe bei einem Ausfall des elektronischen Steuerungsgerätes und somit einem Wegfall des Vorsteuer
drucks (P_VST3) zumindest in manchen Betriebssituationen ein hydraulischer Notbetrieb mit einer geschlossenen Anfahrkupplung aufrechterhalten werden kann, wobei
die Selbsthaltehydraulik zur Realisierung der Notbetriebsfunktion ein Selbsthalteventil (1) und ein Aktivierungsventil (2) aufweist,
das Selbsthalteventil (1) so ausgebildet ist, dass es zur Weiterleitung eines Aktivierungsdrucks (P_A) in Abhängigkeit von einem Steuerdruck (P_D) zu dem Aktivierungsventil (2) geeignet ist,
das Aktivierungsventil (2) zur Weiterleitung des Aktivierungsdrucks (P_A) an das zumindest eine Kupplungsregelventil (3, 3") in der Lage ist,
und die Steuerungsventilanordnung mit Mitteln ausgestattet ist, mit denen das Aktivieren oder Deaktivieren der Notbetriebsfunktion durch den Kupplungsbetätigungsdruck (P_K, P_K') steuerbar ist, **dadurch gekennzeichnet,**
**dass** der Steuerdruck motordrehzahl- oder getriebeabtriebsdrehzahlabhängig ist und dass der Kupplungsbetätigungsdruck (P_K, P_K') über eine Leitung (41) zu einem Druckraum (44) des Aktivierungsventils (2) und von dort über eine Leitung (42) zu einem Druckraum (43) des Selbsthalteventils (1) leitbar ist, und dass der Kupplungsbetätigungsdruck (P_K, P_K') von dem letztgenannten Druckraum (43) über eine Leitung (47) zu einem Druckraum (38) an dem rückstellfederfernen Ende des Selbsthalteventils (1) führbar ist.

2. Steuerungsventilanordnung zur Betätigungssteuerung zumindest einer Anfahrkupplung eines Automatgetriebes eines Kraftfahrzeuges,
mit wenigstens einem Kupplungsregelventil (3, 3', 3"), über das ein Versorgungsdruck (P_V1) in einen Druckraum einer zugeordneten Kupplungsbetätigungsvorrichtung (4, 4') leitbar ist,
mit einem Druckregelventil (166), welches von einem elektronischen Steuerungsgerät ansteuerbar ist und zumindest ein Steuerungsventil der Steuerungsventilanordnung mit einem Vorsteuerdruck (P_VST3) versorgt,
und mit einer Selbsthaltehydraulik, mit deren Hilfe bei einem Ausfall des elektronischen Steuerungsgerätes und somit einem Wegfall des Vorsteuerdrucks (P_VST3) zumindest in manchen Betriebssituationen ein hydraulischer Notbetrieb mit einer geschlossenen Anfahrkupplung aufrechterhalten werden kann, wobei
die Selbsthaltehydraulik zur Realisierung der Notbetriebsfunktion ein Selbsthalteventil (1) und ein Aktivierungsventil (2) aufweist,
das Selbsthalteventil (1) so ausgebildet ist, dass es zur Weiterleitung eines Aktivierungsdrucks (P_A) in Abhängigkeit von einem Steuerdruck (P_D) zu dem Aktivierungsventil (2) geeignet ist,
das Aktivierungsventil (2) zur Weiterleitung des Aktivierungsdrucks (P_A) an das zumindest eine Kupplungsregelventil (3, 3") in der Lage ist,
und die Steuerungsventilanordnung mit Mitteln ausgestattet ist, mit denen das Aktivieren oder Deaktivieren der Notbetriebsfunktion durch den Kupplungsbetätigungsdruck (P_K, P_K') steuerbar ist, **dadurch gekennzeichnet,**
**dass** die Steuerungsventilanordnung zwei Kupplungsregelventile (3, 3') aufweist, von denen ein erstes Kupplungsregelventil (3) von dem Aktivierungsventil (2) mit dem Aktivierungsdruck (P_A) beaufschlagbar ist, bei dem auf die beiden Kupplungsregelventile (3, 3') im Normalbetrieb die Vorsteuerdrücke (P_VST1 bzw. P_VST2) wirken, mit deren Hilfe aus einem den beiden Kupplungsregelventilen (3, 3') aus einem zugeleiteten Versorgungsdruck (P_V1) der jeweilige Kupplungsbetätigungsdruck (P_K bzw. P_K') für zwei Kupplungsbetätigungsvorrichtungen (4, 4') einstellbar ist, und bei dem der jeweils höhere Kupplungsbetätigungsdruck (P_K) oder (P_K') mittels eines Wechselventils (50) über das Aktivierungsventil (2) dem rückstellfederfernen Druckraum (38) des Selbsthalteventil (1) zuführbar ist.

3. Steuerungsventilanordnung nach Anspruch 1 oder 2, mit einem Kupplungsregelventil (3) und einer Kupplungsbetätigungsvorrichtungen (4), **dadurch gekennzeichnet, dass** diese derart ausgebildet ist, dass bei einem ausreichend hohen drehzahlabhängigen Steuerdruck (P_D) der vor dem Ausfall des elektronischen Steuerungsgeräts bzw. des Wegfalls des Vorsteuerdrucks (P_VST3) zuletzt vorliegende Schaltzustand der Kupplungsbetätigungsvorrichtung (4) beibehalten wird.

4. Steuerungsventilanordnung nach Anspruch 2 mit zwei Kupplungsbetätigungsvorrichtungen (4) und (4'), **dadurch gekennzeichnet, dass** diese derart ausgebildet ist, dass bei einem ausreichend hohen drehzahlabhängigen Steuerdruck (P_D) und einem Ausfall des elektronischen Steuerungsgeräts bzw. des Wegfalls des Vorsteuerdrucks (P_VST3) eine bestimmte Kupplungsbetätigungsvorrichtung (4) der beiden Kupplungsbetätigungsvorrichtungen (4, 4') geschlossen wird bzw. geschlossen bleibt, wenn eine der beiden Kupplungsbetätigungsvorrichtungen (4, 4') vor der genannten Störung geschlossen oder schlupfend geschlossen war.

5. Steuerungsventilanordnung nach Anspruch 2 mit zwei Kupplungsbetätigungsvorrichtungen (4) und (4'), **dadurch gekennzeichnet, dass** diese derart ausgebildet ist, dass bei einem ausreichend hohen drehzahlabhängigen Steuerdruck (P_D) und einem Ausfall des elektronischen Steuerungsgeräts bzw. des Wegfalls des Vorsteuerdrucks (P_VST3) diejenige Kupplungsbetätigungsvorrichtung (4) der beiden Kupplungsbetätigungsvorrichtungen (4, 4') geschlossen wird bzw. geschlossen bleibt, die vor dem genannten Ausfall geschlossen oder schlupfend geschlossen war.

6. Steuerungsventilanordnung nach zumindest einem der vorherigen Ansprüche, **dadurch gekennzeichnet, dass** der den Kupplungsbetätigungsdruck (P_K, P_K') aufnehmende Druckraum (44) am Aktivierungsventil (2) von einem mittleren Steuerkolben (148) eines Steuerschiebers (29) des Aktivierungsventils (2) dann absperrbar ist, wenn im rückstellfederfernen Druckraum (78) des Aktivierungsventils (2) der den Normalbetrieb kennzeichnende Vorsteuerdruck (P_VST3) anliegt.

7. Steuerungsventilanordnung nach zumindest einem der vorherigen Ansprüche, **dadurch gekennzeichnet, dass** der Aktivierungsdruck (P_A) von dem Selbsthalteventil (1) über eine Leitung (14) zu dem Aktivierungsventil (2) und von dort über eine Leitung (15) zu einem Druckraum (80, 80') am rückstellfederfernen Ende des Kupplungsregelventils (3, 3', 3") leitbar ist, wenn der Vorsteuerdruck (P_VST3) am Aktivierungsventil (2) weggefallen ist und der Kupplungsbetätigungsdruck (P_K, P_K') so hoch ist, dass dieser den Steuerschieber (30) des Aktivierungsventils (1) gegen die Kraft dessen Rückstellfeder (31) so weit verschieben kann, dass ein Steuerkolben (20) des Selbsthalteventils (1) eine diesbezügliche Durchleitungsverbindung zwischen zwei Druckräumen (70) und (143) am Selbsthalteventil (1) freigibt.

8. Steuerungsventilanordnung nach zumindest einem der vorherigen Ansprüche, **dadurch gekennzeichnet, dass** das Selbsthalteventil (1) so ausgebildet ist, dass dann, wenn der Vorsteuerdruck (P_VST3) am Aktivierungsventil (2) weggefallen ist und der Kupplungsbetätigungsdruck (P_K, P_K') ausreichend hoch ist, der drehzahlabhängige Steuerdruck (P_D) am Steuerschieber (30) des Selbsthalteventils (1) gegen die Kraft der Rückstellfeder (31) wirken kann.

9. Steuerungsventilanordnung nach zumindest einem der vorherigen Ansprüche, **dadurch gekennzeichnet, dass** zumindest ein Kupplungsregelventil (3, 3") einen kurzen Steuerschieber (34, 34') und einen langen Steuerschieber (19, 19') aufweist, wobei im Notbetrieb der Aktivierungsdruck (P_A) auf den kurzen Steuerschieber (34, 34') leitbar ist und der kurze Steuerschieber (34, 34') dann auf den langen Steuerschieber (19, 19') wirkt.

10. Steuerungsventilanordnung nach zumindest einem der Ansprüche 1 bis 9, **dadurch gekennzeichnet, dass** ein Kupplungsregelventil (3) einen kurzen Steuerschieber (34) und einen langen Steuerschieber (19) aufweist, wobei im Notbetrieb der Aktivierungsdruck (P_A) auf den kurzen Steuerschieber (34) leitbar ist und der kurze Steuerschieber (34) dann auf den langen Steuerschieber (19) wirkt, und dass ein zweites Kupplungsregelventil (3') nur einen langen Steuerschieber (19') aufweist.

11. Steuerungsventilanordnung nach zumindest einem der Ansprüche 1 bis 9, **dadurch gekennzeichnet, dass** beide Kupplungsregelventile (3) und (3") einen kurzen Steuerschieber (34, 34') und einen langen Steuerschieber (19, 19') aufweisen, wobei im Notbetrieb der Aktivierungsdruck (P_A) auf den kurzen Steuerschieber (34, 34') desjenigen Kupplungsregelventils (3, 3") leitbar ist, mit dem über die zugeordnete Kupplungsbetätigungsvorrichtung (4, 4') eine Anfahrkupplung bisher geschlossen oder schlupfend gehalten wurde.

12. Steuerungsventilanordnung nach Anspruch 11, **dadurch gegennzeichnet**, dass ein Kupplungswahlventil (8) vorhanden ist, mit welchem bei einer Aktivierung der Notbetriebsfunktion die zuletzt in Schließrichtung aktive Kupplungsbetätigungsvorrichtung (4, 4') die zugeordnete Kupplung weiter geschlossen oder schlupfend haltend betätigt wird.

13. Steuerungsventilanordnung nach Anspruch 12, **dadurch gekennzeichnet, dass** Kupplungswahlventil (8) als Druckwaage ausgebildet ist, bei dem der Kupplungsbetätigungsdruck (P_K') für die zweite Kupplungsbetätigungsvorrichtung (4') zwei Druckräumen (51, 52) an den axialen Enden des Kupplungswahlventils (8) zuführbar ist, wobei diese beiden Druckräume (51, 52) von einem durchmessergroßen Steuerkolben (61) bzw. einem durchmesserkleinen Steuerkolben (62) axial begrenzt werden, bei dem sich unmittelbar an den durchmesserkleinen Steuerkolben (62) ein dritter Steuerkolben (71) axial anschließt, dessen im Vergleich zu dem durchmesserkleinen Steuerkolben (62) freie Differenzstirnfläche in einem Druckraum (53) von dem Kupplungsbetätigungsdruck (P_K) beaufschlagbar ist, bei dem die zu dem durchmessergrößeren Steuerkolben (61) weisende Stirnfläche des dritten Steuerkolbens (71) sowie die zu dem dritten Steuerkolben (71) weisende Stirnfläche des durchmessergrößeren Steuerkolbens (61) in zugeordneten Druckräumen (55, 56) mit dem Aktivierungsdruck (P_A) beaufschlagbar sind, und bei dem der Aktivierungsdruck (P_A) in Abhängigkeit von der Stellung des Steuerschiebers (66) des Kupplungswahlventils (8) zu einem rückstellfederfernen Druckraum (80) des ersten Kupplungsregelventils (3) oder zu dem rückstellfederfernen Druckraum (80') des zweiten Kupplungsregelventils (3', 3") leitbar ist.

14. Steuerungsventilanordnung nach Anspruch 12 oder 13, **dadurch gekennzeichnet, dass** das Kupplungswahlventil (8) eine federbelastete Rastiervorrichtung (58) aufweist.

15. Steuerungsventilanordnung nach zumindest einem der vorherigen Ansprüche, **dadurch gekennzeichnet, dass** im Bereich des freien Endes eines langen Steuerschiebers (19, 19') des jeweiligen Kupplungsregelventils (3, 3', 3") ein Druckraum (74, 74') mit dem Vorsteuerdruck (P_VST1, P_VST2) beaufschlagbar ist, mit dem der Steuerschieber (19, 19') nach einer Deaktivierung der drehzahlabhängigen Selbsthaltefunktion des Selbsthalteventils (1) soweit gegen die Rückstellkraft der auf diesen Steuerschieber (19, 19') wirkenden Rückstellfeder (33, 33') verschiebbar ist, dass ein zu dem Kupplungsregelventil (3, 3', 3") geführter Versorgungsdruck (P_V1, P_V2) als Kupplungsbetätigungsdruck (P_K, P_K') zur jeweiligen Kupplungsbetätigungsvorrichtung (4, 4') weiterleitbar ist.

16. Steuerungsventilanordnung nach zumindest einem der vorherigen Ansprüche, **dadurch gekennzeichnet, dass** der Aktivierungsdruck (P_A) zuerst auf das Aktivierungsventil (2) und von dort über das Selbsthalteventil (1), oder umgekehrt, an das Kupplungswahlventil (8) weiterleitbar ist.

## Claims

1. Control valve arrangement for the actuating control of at least one starting clutch of an automatic transmission of a motor vehicle, with at least one clutch-regulating valve (3, 3', 3"), via which a supply pressure (P_V1) can be conducted into a pressure space of an assigned clutch actuation device (4, 4'), with a pressure-regulating valve (166) which can be activated by an electronic control unit that supplies at least one control valve of the control valve arrangement with a pilot control pressure (P_VST3), and with self-holding hydraulics, with the aid of which, in the event of a failure of the electronic control unit and therefore a lapse of the pilot control pressure (P_VST3), hydraulic emergency operation with a closed starting clutch can be maintained at least in many operating situations,
the self-holding hydraulics having a self-holding valve (1) and an activating valve (2) for implementing the emergency operating function,
the self-holding valve (1) being designed so that it is suitable for transferring an activating pressure (P_A) to the activating valve (2) as a function of a control pressure (P_D),
the activating valve (2) being capable of transferring the activating pressure (P_A) to the at least one clutch-regulating valve (3, 3"),
and the control valve arrangement being equipped with means by which the activation or deactivation of the emergency operating function can be controlled by means of the clutch actuation pressure (P_K, P_K'),
**characterized**
**in that** the control pressure is dependent on the engine rotational speed and on the transmission output rotational speed, and in that the clutch actuation pressure (P_K, P_K') can be conducted via a line (41) to a pressure space (44) of the activating valve (2) and from there via a line (42) to a pressure space (43) of the self-holding valve (1), and in that the clutch actuation pressure (P_K, P_K') can be routed from the last-mentioned pressure space (43) via a line (47) to a pressure space (38) at the restoring-spring-remote end of the self-holding valve (1).

2. Control valve arrangement for the actuating control of at least one starting clutch of an automatic transmission of a motor vehicle,
with at least one clutch-regulating valve (3, 3', 3"), via which supply pressure (P_V1) can be conducted into a pressure space of an assigned clutch actuation device (4, 4'),
with a pressure-regulating valve (166) which can be activated by an electronic control unit and which supplies at least one control valve of the control valve arrangement with a pilot control pressure (P_VST3),
and with self-holding hydraulics, with the aid of which, in the event of a failure of the electronic control unit and therefore a lapse of the pilot control pressure (P_VST3), hydraulic emergency operation with a closed starting clutch can be maintained at least in many operating situations, the self-holding hydraulics having a self-holding valve (1) and an activating valve (2) for implementing the emergency operating function,
the self-holding valve (1) being designed so that it is suitable for transferring an actuating pressure (P A) to the activating valve (2) as a function of a control pressure (P_D),
the activating valve (2) being capable of transferring the activating pressure (P_A) to the at least one clutch-regulating valve (3, 3"),
and the control valve arrangement being equipped with means by which the activation or deactivation of the emergency operating function can be controlled by means of a clutch actuation pressure (P_K, P_K'),
**characterized**
**in that** the control valve arrangement has two clutch-regulating valves (3, 3'), of which a first clutch-regulating valve (3) can be acted upon by the activating valve (2) with the activating pressure (P_A), during which the pilot control pressures (P_VST1 and P_VST2) act during normal operation upon the two clutch-regulating valves (3, 3'), with the aid of which pilot control pressures the respective clutch actuation pressure (P_K or P_K') for two clutch actuation devices (4, 4') can be set from one of the two clutch-regulating valves (3, 3') out of the delivered supply pressure (P_V1), and during which the in each case higher clutch actuation pressure (P_K) or (P_K') can be supplied via the activating valve (2) to the restoring-spring-remote pressure space (38) of the self-holding valve (1) by means of a shuttle valve (50).

3. Control valve arrangement according to Claim 1 or 2, with a clutch-regulating valve (3) and with a clutch actuation device (4), **characterized in that** the latter is designed in such a way that, in the event of a sufficiently high rotational-speed-dependent control pressure (P_D), the shift state, last present before the failure of the electronic control unit or the lapse of the pilot control pressure (P_VST3), on the clutch actuation device (4) is maintained.

4. Control valve arrangement according to Claim 2 with two clutch actuation devices (4) and (4'),
**characterized in that** these are designed in such a way that, in the event of a sufficiently high rotational-speed-dependent control pressure (P_D) and a failure of the electronic control unit or the lapse of the pilot control pressure (P_VST3), a specific clutch actuation device (4) of the two clutch actuation devices (4, 4') is closed or remains closed if one of the two clutch actuation devices (4, 4') was closed or was closed with slip before the said fault.

5. Control valve arrangement according to Claim 2 with two clutch actuation devices (4) and (4'), **characterized in that** these are designed in such a way that, in the event of a sufficiently high rotational-speed-dependent control pressure (P_D) and a failure of the electronic control unit or the lapse of the pilot control pressure (P_VST3), that clutch actuation device (4) of the two clutch actuation devices (4, 4') which was closed or was closed with slip for the said failure is closed or remains closed.

6. Control valve arrangement according to at least one of the preceding claims, **characterized in that** the pressure space (44), receiving the clutch actuation pressure (P_K, P_K'), and the activating valve (2) can be shut off by a middle control piston (148) of a control slide (29) of the activating valve (2) when the pilot control pressure (P_VST3) characterizing normal operation prevails in the restoring-spring-remote pressure space (78) of the activating valve (2).

7. Control valve arrangement according to at least one of the preceding claims, **characterized in that** the activating pressure (P_A) can be conducted from the self-holding valve (1) via a line (14) to the activating valve (2) and from there via a line (15) to a pressure space (80, 80') at the restoring-spring-remote end of the clutch-regulating valve (3, 3', 3") when the pilot control pressure (P_VST3) has lapsed and the activating valve (2) and the clutch actuation pressure (P_K, P_ K') is so high that it can displace the control slide (30) of the activating valve (1), counter to the force of its restoring spring (31), to an extent such that a control piston (20) of the self-holding valve (1) releases a respective passage connection between two pressure spaces (70) and (143) on the self-holding valve (1).

8. Control valve arrangement according to at least one of the preceding claims, **characterized in that** the self-holding valve (1) is designed so that, when the pilot control pressure (P_VST3) has lapsed at the activating valve (2) and the clutch actuation pressure (P_K, P_K') is sufficiently high, the rotational-speed-dependent control pressure (P_D) can act on the control slide (30) of the self-holding valve (1) counter to the force of the restoring spring (31).

9. Control valve arrangement according to at least one of the preceding claims, **characterized in that** at least one clutch-regulating valve (3, 3") has a short control slide (34, 34') and a long control slide (19, 19'), in emergency operation the activating pressure (P_A) being conductable to the short control slide (34, 34'), and the short control slide (34, 34') then acting on the long control slide (19, 19').

10. Control valve arrangement according to at least one of Claims 1 to 9, **characterized in that** one clutch-regulating valve (3) has a short control slide (34) and a long control slide (19), in emergency operation the activating pressure (P_A) being conductable to the short control slide (34), and the short control slide (34) then acting on the long control slide (19), and **in that** a second clutch-regulating valve (3') has only a long control slide (19').

11. Control valve arrangement according to at least one of Claims 1 to 9, **characterized in that** both clutch-regulating valves (3) and (3") have a short control slide (34, 34') and a long control slide (19, 19'), in emergency operation the activating pressure (P_A) being conductable to the short control slide (34, 34') of that clutch-regulating valve (3, 3"), by means of which a starting clutch has hitherto been closed or held with slip via the assigned clutch actuation device (4, 4').

12. Control valve arrangement according to Claim 11, **characterized in that** a clutch selection valve (8) is present, by means of which, in the event of an activation of the emergency operating function, via the clutch actuation device (4, 4') last active in the closing direction, the assigned clutch is further closed or is actuated, held with slip.

13. Control valve arrangement according to Claim 12, **characterized in that** the clutch selection valve (8) is designed as a pressure balance, in which a clutch actuation pressure (P_K') for the second clutch actuation device (4') can be supplied to two pressure spaces (51, 52) at the axial ends of the clutch selection valve (8), these two pressure spaces (51, 52) being delimited axially by a large-diameter control piston (61) or a small-diameter control piston (62), in which the small-diameter control piston (62) is directly followed axially by a third control piston (71), of which the free differential end face with respect to the small-diameter control piston (62) can be acted upon by the clutch actuation pressure (P_K) in a pressure space (53), in which the end face, pointing to the larger-diameter control piston (61), of the third control piston (71) and to the end face, pointing to a third control piston (71), of the larger-diameter control piston (61) can be acted upon with the activating pressure (P_A) in assigned pressure spaces (55, 56), and in which the activating pressure (P_A) can be conducted, as a function of the position of the control slide (66) of the clutch selection valve (8), to a restoring-spring-remote pressure space (80) of the first clutch-regulating valve (3) or to the restoring-spring-remote pressure space (80') of the second clutch-regulating valve (3', 3").

14. Control valve arrangement according to Claim 12 or 13, **characterized in that** the clutch selection valve (8) has a spring-loaded latching device (58).

15. Control valve arrangement according to at least one of the preceding claims, **characterized in that**, in the region of the free end of a long control slide (19, 19') of the respective clutch-regulating valve (3, 3', 3"), a pressure space (74, 74') can be acted upon with the pilot control pressure (P_VST1, P_VST2), by means of which, after a deactivation of the rotational-speed-dependent self-holding function of the self-holding valve (1), the control slide (19, 19') can be displaced counter to the restoring force of the restoring spring (33, 33') acting on this control slide (19, 19'), to an extent such that a supply pressure (P_V1, P_V2) routed to the clutch-regulating valve (3, 3', 3'') can be transferred as clutch actuation pressure (P_K, P_K') to the respective clutch actuation device (4, 4').

16. Control valve arrangement according to at least one of the preceding claims, **characterized in that** the activating pressure (P_A) can be transferred to the clutch selection valve (8) first to the activating valve (2) and from there via the self-holding valve (1), or vice versa.

## Revendications

1. Agencement de soupapes de commande pour la commande d'actionnement d'au moins un embrayage de démarrage d'une boîte de vitesses automatique d'un véhicule automobile, comprenant au moins une soupape de régulation d'embrayage (3, 3', 3"), par le biais de laquelle une pression d'alimentation (P_V1) peut être introduite dans un espace de pression d'un dispositif d'actionnement d'embrayage associé (4, 4'),
une soupape de régulation de la pression (166), qui peut être commandée par un appareil de commande électronique et qui alimente au moins une soupape de commande de l'agencement de soupapes de commande en pression pilote (P_VST3),
et une hydraulique de maintien, à l'aide de laquelle, en cas de panne de l'appareil de commande électronique, et donc en l'absence de la pression pilote (P_VST3), au moins dans certaines situations de fonctionnement, un fonctionnement de secours hydraulique peut être maintenu avec un embrayage de démarrage fermé,
l'hydraulique de maintien présentant, pour réaliser la fonction de fonctionnement de secours, une soupape de maintien (1) et une soupape d'activation (2) ,
la soupape de maintien (1) étant réalisée de telle sorte qu'elle soit appropriée pour transmettre une pression d'activation (P_A) en fonction d'une pression de commande (P_D) à la soupape d'activation (2),
la soupape d'activation (2) étant en mesure de transmettre la pression d'activation (P_A) à l'au moins une soupape de régulation d'embrayage (3, 3"),
et l'agencement de soupapes de commande étant muni de moyens avec lesquels l'activation ou la désactivation de la fonction de fonctionnement de secours peuvent être commandées par la pression d'activation d'embrayage (P_K, P_K'),
**caractérisé en ce que**
la pression de commande dépend du régime du moteur ou du régime à la sortie de la boîte de vitesses, et **en ce que** la pression d'activation d'embrayage (P_K, P_K') peut être introduite par le biais d'une conduite (41) dans un espace de pression (44) de la soupape d'activation (2) et de là par le biais d'une conduite (42) dans un espace de pression (43) de la soupape de maintien (1), et **en ce que** la pression d'activation d'embrayage (P_K, P_K') peut être guidée du dernier espace de pression mentionné (43) par le biais d'une conduite (47) dans un espace de pression (38) à l'extrémité de la soupape de maintien (1) éloignée du ressort de rappel.

2. Agencement de soupapes de commande pour la commande d'actionnement d'au moins un embrayage de démarrage d'une boîte de vitesses automatique d'un véhicule automobile, comprenant au moins une soupape de régulation d'embrayage (3, 3', 3"), par le biais de laquelle une pression d'alimentation (P_ V1) peut être introduite dans un espace de pression d'un dispositif d'actionnement d'embrayage associé (4, 4'),
une soupape de régulation de la pression (166), qui peut être commandée par un appareil de commande électronique et qui alimente au moins une soupape de commande de l'agencement de soupapes de commande en pression pilote (P_VST3),
et une hydraulique de maintien, à l'aide de laquelle, en cas de panne de l'appareil de commande électronique, et donc en l'absence de la pression pilote (P_VST3), au moins dans certaines situations de fonctionnement, un fonctionnement de secours hydraulique peut être maintenu avec un embrayage de démarrage fermé,
l'hydraulique de maintien présentant, pour réaliser la fonction de fonctionnement de secours, une soupape de maintien (1) et une soupape d'activation (2),
la soupape de maintien (1) étant réalisée de telle sorte qu'elle soit appropriée pour transmettre une pression d'activation (P_A) en fonction d'une pression de commande (P_D) à la soupape d'activation (2),
la soupape d'activation (2) étant en mesure de transmettre la pression d'activation (P_A) à l'au moins une soupape de régulation d'embrayage (3, 3"),
et l'agencement de soupapes de commande étant muni de moyens avec lesquels l'activation ou la désactivation de la fonction de fonctionnement de secours peuvent être commandées par la pression d'activation d'embrayage (P_K, P_K'),
**caractérisé en ce que**
l'agencement de soupapes de commande présente deux soupapes de régulation d'embrayage (3, 3'), dont une première soupape de régulation d'embrayage (3) peut être sollicitée par la soupape d'activation (2) avec la pression d'activation (P_A), et pendant le fonctionnement normal, les pressions pilotes (P_VST1 ou P_VST2) agissant sur les deux soupapes de régulation d'embrayage (3, 3'), à l'aide desquelles on peut ajuster, à partir d'une pression d'alimentation (P-V1) acheminée aux deux soupapes de régulation d'embrayage (3, 3'), la pression d'actionnement d'embrayage respective (P_K ou P_K') pour deux dispositifs d'actionnement d'embrayage (4, 4'), et la pression d'actionnement d'embrayage respectivement plus élevée (P_K) ou (P_K') pouvant être transmise au moyen d'une soupape d'échange (50) par le biais de la soupape d'activation (2) à l'espace de pression (38), éloigné du ressort de rappel, de la soupape de maintien (1).

3. Agencement de soupapes de commande selon la revendication 1 ou 2, comprenant une soupape de régulation d'embrayage (3) et un dispositif d'actionnement d'embrayage (4), **caractérisé en ce que** celui-ci est réalisé de telle sorte qu'à une pression de commande (P_D) dépendant du régime suffisamment élevée, l'état de commutation du dispositif d'actionnement d'embrayage (4) présent en dernier avant la panne de l'appareil de commande électronique ou avant l'absence de la pression pilote (P_VST3), soit maintenu.

4. Agencement de soupapes de commande selon la revendication 2, comprenant deux dispositifs d'actionnement d'embrayage (4) et (4'), **caractérisé en ce que** celui-ci est réalisé de telle sorte qu'à une pression de commande (P_D) dépendant du régime suffisamment élevée, et dans le cas d'une panne de l'appareil de commande électronique, ou de l'absence de la pression pilote (P_VST3), un dispositif d'actionnement d'embrayage déterminé (4) des deux dispositifs d'actionnement d'embrayage (4, 4') est fermé ou reste fermé, si l'un des deux dispositifs d'actionnement d'embrayage (4, 4') était fermé ou fermé avec glissement avant ladite perturbation.

5. Agencement de soupapes de commande selon la revendication 2, avec deux dispositifs d'actionnement d'embrayage (4) et (4'), **caractérisé en ce que** celui-ci est réalisé de telle sorte qu'à une pression de commande (P_D) dépendant du régime suffisamment élevée, et dans le cas d'une panne de l'appareil de commande électronique, ou de l'absence de la pression pilote (P_VST3), le dispositif d'actionnement d'embrayage (4) des deux dispositifs d'actionnement d'embrayage (4, 4') qui était fermé ou fermé avec glissement avant ladite panne, est fermé ou reste fermé.

6. Agencement de soupapes de commande selon au moins l'une quelconque des revendications précédentes,
**caractérisé en ce que** l'espace de pression (44) recevant la pression d'actionnement d'embrayage (P_K, P_K') au niveau de la soupape d'activation (2) peut être bloqué par un piston de commande central (148) d'un tiroir de commande (29) de la soupape d'activation (2), lorsque la pression pilote (P_VST3) caractérisant le fonctionnement normal s'applique dans l'espace de pression (78), éloigné du ressort de rappel, de la soupape d'activation (2).

7. Agencement de soupapes de commande selon au moins l'une quelconque des revendications précédentes, **caractérisé en ce que** la pression d'activation (P_A) peut être introduite depuis la soupape de maintien (1) par le biais d'une conduite (14) dans la soupape d'activation (2) et de là par le biais d'une conduite (15) dans un espace de pression (80, 80') à l'extrémité éloignée du ressort de rappel de la soupape de régulation d'embrayage (3, 3', 3"), en l'absence de la pression pilote (P_VST3) au niveau de la soupape d'activation (2) et lorsque la pression d'actionnement d'embrayage (P_K, P_K') est si élevée qu'elle puisse déplacer le tiroir de commande (30) de la soupape d'activation (2) à l'encontre de la force de son ressort de rappel (31) dans une mesure telle qu'un piston de commande (20) de la soupape de maintien (1) libère une connexion de passage s'y rapportant entre deux espaces de pression (70) et (143) au niveau de la soupape de maintien (1).

8. Agencement de soupapes de commande selon au moins l'une quelconque des revendications précédentes, **caractérisé en ce que** la soupape de maintien (1) est réalisée de telle sorte qu'en l'absence de la pression pilote (P_VST3) au niveau de la soupape d'activation (2) et lorsque la pression d'actionnement d'embrayage (P_K, P_K') est suffisamment élevée, la pression de commande (P_D) dépendant du régime au niveau du tiroir de commande (30) de la soupape de maintien (1) puisse agir à l'encontre de la force du ressort de rappel (31).

9. Agencement de soupapes de commande selon au moins l'une quelconque des revendications précédentes, **caractérisé en ce qu'**au moins une soupape de régulation d'embrayage (3, 3") présente un tiroir de commande court (34, 34') et un tiroir de commande long (19, 19'), la pression d'activation (P_A), en mode de fonctionnement de secours, pouvant être transmise au tiroir de commande court (34, 34') et le tiroir de commande court (34, 34') agit alors sur le tiroir de commande long (19, 19').

10. Agencement de soupapes de commande selon au moins l'une quelconque des revendications 1 à 9, **caractérisé en ce qu'**une soupape de régulation d'embrayage (3) présente un tiroir de commande court (34) et un tiroir de commande long (19), la pression d'activation (P_A), en mode de fonctionnement de secours, pouvant être transmise au tiroir de commande court (34) et le tiroir de commande court (34) agissant alors sur le tiroir de commande long (19), et **en ce qu'**une deuxième soupape de régulation d'embrayage (3') ne présente qu'un tiroir de commande long (19').

11. Agencement de soupapes de commande selon au moins l'une quelconque des revendications 1 à 9, **caractérisé en ce que** les deux soupapes de régulation d'embrayage (3) et (3") présentent un tiroir de commande court (34, 34') et un tiroir de commande long (19, 19'), la pression d'activation (P_A), en mode de fonctionnement de secours, pouvant être transmise au tiroir de commande court (34, 34') de la soupape de régulation d'embrayage (3, 3") avec laquelle un embrayage de démarrage avait jusqu'alors été fermé ou maintenu glissant par le biais du dispositif d'actionnement d'embrayage associé (4, 4").

12. Agencement de soupapes de commande selon la revendication 11, **caractérisé en ce qu'**il est prévu une soupape de sélection d'embrayage (8), avec laquelle, dans le cas d'une activation de la fonction de fonctionnement de secours, le dernier dispositif d'actionnement d'embrayage actif dans la direction de fermeture (4, 4') est actionné en maintenant encore fermé ou glissant l'embrayage associé.

13. Agencement de soupapes de commande selon la revendication 12, **caractérisé en ce que** la soupape de sélection d'embrayage (8) est réalisée sous forme de balance de pression, la pression d'actionnement d'embrayage (P_K') pour le deuxième dispositif d'actionnement d'embrayage (4') pouvant être acheminée à deux espaces de pression (51, 52) aux extrémités axiales de la soupape de sélection d'embrayage (8), ces deux espaces de pression (51, 52) étant limités axialement par un piston de commande de grand diamètre (61) ou un piston de commande de petit diamètre (62), un troisième piston de commande (71) se raccordant axialement directement au piston de commande de petit diamètre (62) et sa surface frontale différentielle libre par comparaison avec le piston de commande de petit diamètre (62) pouvant être sollicitée dans un espace de pression (53) par la pression d'actionnement d'embrayage (P_K), la surface frontale du troisième piston de commande (71) tournée vers le piston de commande de plus grand diamètre (61) ainsi que la surface frontale du piston de commande de plus grand diamètre (61) tournée vers le troisième piston de commande (71) étant sollicitées dans des espaces de pression (55, 56) associés avec la pression d'activation (P_A), et la pression d'activation (P_A) pouvant être introduite en fonction de la position du tiroir de commande (66) de la soupape de sélection d'embrayage (8) dans un espace de pression (80), éloigné du ressort de rappel, de la première soupape de régulation d'embrayage (3), ou dans l'espace de pression (80'), éloigné du ressort de rappel, de la deuxième soupape de régulation d'embrayage (3', 3").

14. Agencement de soupapes de commande selon la revendication 12 ou 13, **caractérisé en ce que** la soupape de sélection d'embrayage (8) présente un dispositif d'encliquetage (58) sollicité par ressort.

15. Agencement de soupapes de commande selon au moins l'une quelconque des revendications précédentes, **caractérisé en ce que** dans la région de l'extrémité libre d'un tiroir de commande long (19, 19') de la soupape de régulation d'embrayage respective (3, 3', 3"), un espace de pression (74, 74') peut être sollicité avec la pression pilote (P_VST1, P_VST2), avec laquelle le tiroir de commande (19, 19'), après une désactivation de la fonction de maintien de la soupape de maintien (1), dépendant du régime, peut être déplacé à l'encontre de la force de rappel du ressort de rappel (33, 33') agissant sur ce tiroir de commande (19, 19') dans une mesure telle qu'une pression d'alimentation (P_V1, P_V2) acheminée vers la soupape de régulation d'embrayage (3, 3', 3") puisse être transmise sous forme de pression d'actionnement d'embrayage (P_K, P_K') au dispositif d'actionnement d'embrayage respectif (4, 4').

16. Agencement de soupapes de commande selon au moins l'une quelconque des revendications précédentes, **caractérisé en ce que** la pression d'activation (P_A) peut être transmise d'abord à la soupape d'activation (2) et de là par le biais de la soupape de maintien (1), ou inversement, à la soupape de sélection d'embrayage (8).
